# EUROPÄISCHE PATENTSCHRIFT

(11) **EP 3 281 529 B1**
(45) Veröffentlichungstag und Bekanntmachung des Hinweises auf die Patenterteilung: **15.05.2019**
(21) Anmeldenummer: 17184953.2
(22) Anmeldetag: 04.08.2017
(51) Int. Cl.: A22C 11/00

(54) **VORRICHTUNG UND VERFAHREN ZUM AUSRICHTEN VON WÜRSTEN**
APPARATUS AND METHOD OF ORIENTING SAUSAGES
DISPOSITIF ET PROCÉDÉ D'ALIGNEMENT DE SAUCISSES

(30) Priorität: 09.08.2016 DE 102016114731
(43) Veröffentlichungstag der Anmeldung: 14.02.2018
(73) Patentinhaber: VEMAG Maschinenbau GmbH, 27283 Verden/Aller (DE)
(72) Erfinder: Knodel, Peter, 28876 Oyten (DE); Thelen, Christoph, 21255 Dohren (DE); Meininger, Thorsten, 27283 Verden (DE)
(74) Vertreter: Eisenführ Speiser

(56) Entgegenhaltungen:
- WO-A1-2012/144890
- DE-A1- 3 731 051

## Beschreibung

Die Erfindung betrifft eine Vorrichtung zum Ausrichten von Würsten, aufweisend mindestens eine Fördereinrichtung mit einem bewegbaren, insbesondere umlaufenden Förderelement, auf welches einzelne Würste auflegbar und in eine Förderrichtung entlang einer Bewegungsbahn transportierbar sind. Die Erfindung betrifft ferner ein System zum Ausrichten von Würsten.

Die Erfindung betrifft ferner ein Verfahren zum Ausrichten von Würsten, bei dem einzelne Würste auf ein bewegbares, vorzugsweise umlaufendes Förderelement einer Fördereinrichtung aufgebracht werden, und die Würste entlang einer Bewegungsbahn auf dem Förderelement transportiert werden.

Bei der industriellen Herstellung von Portionen aus pastöser Lebensmittelmasse wie Würsten werden in sogenannten Würstchenlinien mehrere Maschinen zu einem aufeinander abgestimmten System kombiniert. Würste unterschiedlicher Qualität, Länge oder Kaliber lassen sich durch individuell und aufeinander abgestimmte Maschinen in einer Fertigungslinie herstellen. Beispielsweise können Würste in Natur-, Kunst- oder Collagendarm hergestellt werden. Mittels einer Füllmaschine und daran angeschlossener Vorsatzgeräte kann die pastöse Lebensmittelmasse, das Wurstbrät, in den Darm eingegeben werden. Mittels eines Abdrehgerätes lassen sich individuelle Portionen herstellen. Die Portionen können mittels einer Trenneinrichtung in einzelne Würste separiert werden. So können in einer Würstchenlinie bis zu mehr als 1.000 Würste pro Minute hergestellt werden. Die Würste können auf verschiedene Weisen weiterverarbeitet und verpackt werden mittels Verpackungsmaschinen. Einzelne Portionen, wie beispielsweise während der Herstellung geplatzte Würste, sind vor dem Verpacken auszusortieren, also aus dem Prozess auszuschleusen.

Im Hinblick auf die Verpackung mittels Verpackungsmaschinen ist es häufig erforderlich, Würste (oder ähnliche einzelne Portionen) auszurichten oder zu sortieren. Neben einer Sortierung nach Länge kann auch eine Sortierung nach Krümmung einer Portion gewünscht oder erforderlich sein. So kann es beispielsweise gewünscht sein, eine Gruppe von mehreren einzelnen gekrümmten Würsten nebeneinander und ggf. auch übereinander in eine Verpackung, beispielsweise eine Schale einzulegen. Dabei kann es gewünscht sein, dass gekrümmte Würste gleichgerichtet eingelegt werden. Hierbei tritt die Schwierigkeit auf, dass die nach der Herstellung, insbesondere nach dem Trennen einzelner Portionen mittels der Trenneinrichtung erzeugte Würste zufällig und in verschiedene Richtungen gekrümmt sind, und keinesfalls eine gleiche oder homogene Krümmung vorliegt. Stattdessen fallen die Würste zufällig in unterschiedlich stark ausgeprägter Krümmung und Krümmung in unterschiedlicher Richtung an. Dies ist auch dann der Fall, wenn die einzelnen Würste auf eine Fördereinrichtung mit einem insbesondere umlaufenden Förderelement, beispielsweise einem Förderband aufgebracht werden. Die Würste weisen hinsichtlich ihrer Krümmung verschiedene Ausrichtungen auf, d. h. mal weist die Krümmung nach rechts oder mal nach links, wenn die Würste auf dem Förderband aufliegen.

Eine zuverlässige Ausrichtung und/oder Sortierung gekrümmter Würste mit akzeptabler Prozessgeschwindigkeit stellt in Würstchenlinien bisher ein Problem dar. Während das Gruppieren von geraden Portionen, beispielsweise geraden Würsten möglich ist, fehlt es an technischen Systemen, die in der Lage wären, eine zuverlässige Ausrichtung bzw. Sortierung von gekrümmten Würsten mit akzeptabler Geschwindigkeit vorzunehmen.

So offenbart die DE 4 007 803 A1 eine Einrichtung und ein betreffendes Verfahren zum Überführen von Würsten. Die Würste weisen zunächst eine dahingehende Orientierung auf, dass die Längsachse der Würste parallel zur Transportrichtung verläuft. Die so ausgerichteten Würste werden nun in eine Ablenkvorrichtung eingebracht und von dieser im Wesentlichen um 90° gedreht, sodass die Längsachse der Würste nun quer zur Transportrichtung ausgerichtet ist. Diese Vorrichtung ist jedoch nicht zum Sortieren von gekrümmten Würsten anhand ihrer Krümmungen geeignet.

Die US 2002/0115401 A1 offenbart eine Förder- und Sortiervorrichtung für Würste, die sich dem Prinzip eines Rüttelbandes bedient, auf welches Führungen zur Führung von Würste aufgebracht sind. Durch Vibration und Neigung des Bandes gelangen Würste in diese Führungen und werden in Transportrichtung gefördert.

WO2012/144890 offenbart eine Vorrichtung nach dem Oberbegriff der Ansprüche 1 und 10.

Es wird jedoch keine Vorrichtung offenbart, die dazu geeignet wäre, eine Sortierung von gekrümmten Würsten zwischen solchen Führungen zu bewerkstelligen. Eine Sortierung gekrümmter Würste anhand ihrer Krümmungsrichtung und eine anschließende Gruppierung derselben sind nicht offenbart.

Aufgabe der vorliegenden Erfindung ist es, eine Vorrichtung zum Ausrichten und/oder Sortieren von einzelnen Portionen, insbesondere gekrümmten Würsten bereitzustellen. Aufgabe der Erfindung ist auch, ein Verfahren und ein System zum Ausrichten und/oder Sortieren von Würsten bereitzustellen.

Die in Anspruch 1 definierte Erfindung löst die Aufgabe in einem ersten Aspekt mit einer Vorrichtung der eingangs genannten Art durch zwei quer zur Förderrichtung voneinander beabstandete und oberhalb des bewegbaren Förderelementes angeordnete Ausrichteinrichtungen mit jeweils mindestens einer Führung zum seitlichen Führen der Würste wobei der Abstand der Führungen der Ausrichteinrichtung so eingestellt ist, dass die gekrümmte Wurst durch die beabstandeten seitlichen Führungen elastisch verformt und dabei wenigstens etwas begradigt bzw. geradegebogen wird und während des weiteren Transportes entlang der Bewegungsbahn das vordere Ende der Wurst von den Führungen der beabstandeten Ausrichteinrichtung freikommt, während ein hinterer Abschnitt der Wurst noch zwischen den Führungen verbleibt, die Wurst dann nach dem Freikommen aufgrund der Elastizität wenigstens teilweise wieder ihre zuvor stärker gekrümmte Form annimmt, und der vordere Abschnitt der Wurst dabei in eine Richtung quer zur Förderrichtung und damit wenigstens etwas quer zur Bewegungsbahn der Wurst bewegt wird.

Mittels der zwei erfindungsgemäßen, beabstandeten und oberhalb eines Förderelementes, beispielsweise eines umlaufenden Förderbandes, angeordneten Ausrichteinrichtungen mit jeweils einer Führung lassen sich die einzelnen Würste auf einfache und zuverlässige Weise und mit hoher Geschwindigkeit im Rahmen eines industriellen Prozesses ausrichten. Eine einzelne gekrümmte Wurst gelangt auf der Bewegungsbahn mittels des Förderelementes zwischen die beiden Führungen der beabstandeten Ausrichteinrichtungen. Eine gekrümmte, flache, auf dem Förderelement aufliegende Wurst wird zwischen den Führungen zentriert und geführt.

Der Abstand der Führungen der Ausrichtvorrichtung kann insbesondere so gewählt und eingestellt werden, dass die gekrümmte Wurst durch die beabstandeten seitlichen Führungen elastisch verformt und dabei wenigstens etwas begradigt bzw. geradegebogen wird. Sie wird in einem solchen elastisch verformten, wenigstens etwas begradigten Zustand mittels des Förderelementes zunächst weiter entlang der Bewegungsbahn transportiert. Es kann sich so insbesondere ein Zustand einstellen, in dem die zwei Endabschnitte der Wurst an der Führung der einen - seitlichen - Ausrichtvorrichtung anliegen, während ein gegenüberliegend mittlerer (wenigstens teilweise konvexer) Bereich der Wurst an der gegenüberliegenden beabstandeten Führung der zweiten Ausrichtvorrichtung anliegt. Während des weiteren Transportes entlang der Bewegungsbahn wird das vordere Ende der Wurst zu einem Zeitpunkt von den Führungen der beabstandeten Ausrichtvorrichtung freikommen, während ein hinterer Abschnitt der Wurst noch zwischen den Führungen verbleibt, beispielsweise ein mittlerer Abschnitt noch an einer der Führungen und der hintere Endabschnitt noch an der gegenüberliegenden Führung anliegt. Aufgrund der durch die Elastizität, der Begradigung und elastischen Verformung gespeicherten Energie innerhalb der Wurst wird die Wurst dann nach dem Freikommen wenigstens teilweise wieder ihre zuvor stärker gekrümmte Form annehmen. Der vordere Abschnitt der Wurst wird dabei in eine Richtung quer zur Förderrichtung und damit wenigstens etwas quer zur Bewegungsbahn der Wurst bewegt. Würste mit einer Krümmung zu einer Seite, beispielsweise nach rechts, werden nach dem Freikommen von den Führungen der Ausrichtvorrichtungen etwas mehr auf einer Seite des Förderelementes liegen, insbesondere mit dem vorderen Abschnitt, während Würste mit einer Krümmung zur anderen Seite, beispielsweise nach links mehr nach links weisen, insbesondere mit ihrem vorderen Abschnitt. Somit sind hintereinander folgende Würste nach dem Durchlaufen der beiden Ausrichtvorrichtungen entweder etwas mehr nach links auf dem Förderelement ausgerichtet oder links liegend oder nach rechts ausgerichtet oder etwas mehr rechts auf dem Förderelement liegend. Dadurch lassen sich die Würste im Folgenden nach einer derartigen Ausrichtung je nach ihrer Krümmung sortieren. Wichtig ist der Abstand der beiden Führungen zueinander. Der Abstand ist an das jeweilige Kaliber und/oder der Längen der Portionen anzupassen und einzustellen. Die Portionen bzw. Würste sollen gemäß einer Ausführungsform der Erfindung durch die Führung wenigstens temporär etwas begradigt oder gerade gebogen werden und können aufgrund ihrer Eigenelastizität anschließend wieder wenigstens teilweise in eine gekrümmte Form zurück. Während des Transportes mittels der Fördereinrichtung entlang der Führungen sollen die Portionen, also die Würste, nicht oder nicht substantiell abgebremst werden. So lassen sich erfindungsgemäß Würste hinsichtlich ihrer unterschiedlichen Krümmungen ausrichten.

Wenn alternativ der Abstand der Führungen der Ausrichtvorrichtungen in etwa einer Länge der portionierten Würste oder anderen Portionen aus Lebensmitteln angepasst ist, können Würste mittels der erfindungsgemäßen Ausrichtvorrichtung dadurch, dass sie in den Einflussbereich der beiden Führungen während des Transportes gelangen, alternativ auch so ausgerichtet werden, dass sie nach dem Durchlaufen zwischen den Führungen im Wesentlichen quer zur Fördereinrichtung ausgerichtet sind.

Gemäß einer Weiterbildung der Erfindung wird vorgeschlagen, dass jede Ausrichtvorrichtung jeweils eine längliche sich in Förderrichtung erstreckende Führung für die Würste aufweist, wobei die Führungen sich in einem Abstand quer zur Förderrichtung einander gegenüberliegen. Durch die sich über eine Strecke in Förderrichtung erstreckenden Führungen lassen sich die Würste mit konstruktiv einfachen Mitteln zuverlässig ausrichten.

Gemäß einer bevorzugten Ausführungsform ist vorgesehen, dass der Abstand der Führungen der zwei Ausrichtvorrichtungen mittels einer Verstelleinrichtung verstellbar ist. Da der Abstand an das Kaliber und/oder die Länge der Würste angepasst sein soll, bietet sich eine solche Verstelleinrichtung an, da so im Betrieb vergleichsweise einfach und bequem der Abstand eingestellt werden kann.

Gemäß einer Weiterbildung wird vorgeschlagen, dass die Länge der Führung und der Abstand der gegenüberliegenden Führungen variabel und an die Längen der Würste anpassbar sind. Zweckmäßigerweise wird vorgeschlagen, dass die Länge einer Führung in etwa der Länge einer Wurst und der Abstand etwa dem Kaliber einer Wurst entspricht oder mindestens der Länge einer Wurst und der Abstand mindestens dem Kaliber einer Wurst entspricht.

Gemäß einer bevorzugten alternativen Ausführungsform ist vorgesehen, dass die Führung als im Wesentlichen starre Schiene oder als umlaufendes sich im Wesentlichen in Förderrichtung erstreckendes Band oder als Rollenbahn ausgebildet ist. Eine starre Schiene ist ein relativ einfaches Konstruktionselement, welches die erfindungsgemäße Ausrichtung gewährleisten kann. Das Material der Schiene sollte vorzugsweise so gewählt werden, dass die Reibung zwischen einer Wurst und der Schiene gering ist. Alternativ bietet sich an, ein umlaufendes, sich in Förderrichtung erstreckendes Band oder eine Rollenbahn als Führung vorzusehen, denn so lässt sich die Reibung reduzieren und es könnte auch eine einfache Anpassung der Länge an die Längen der Würste vorgenommen und ggf. auch vorteilhaft die Form der Führung variiert werden.

Gemäß einer weiteren alternativen Ausführungsform wird vorgeschlagen, dass die gegenüberliegenden Führungen - in einem ersten Bereich - einen Zuführbereich bilden, in dem der Abstand der gegenüberliegenden Führungen in Förderrichtung abnimmt, und einen sich an den Zuführbereich anschließenden Ausrichtbereich bilden, in dem der Abstand der gegenüberliegenden Führungselemente im Wesentlichen gleich bleibt. Dadurch dass die Führungen einen Zuführbereich bilden, können einzelne Würste vorteilhaft zwischen den Führungen zentriert und der Ausrichtvorrichtung zuverlässig zugeführt werden. Hierbei ist durch einen abnehmenden Abstand eine Art Einführtrichter gebildet, so dass die Würste während des Transports auf dem Förderelement zuverlässig zugeführt werden können. Im Anschluss an den Zuführbereich kann unmittelbar oder auch mit einem gewissen Abstand dann der Ausrichtbereich gebildet sein, in dem der Abstand der gegenüberliegenden Führungselemente im Wesentlichen gleich bleibt, so dass auch eine gleichmäßige und zuverlässige Ausrichtung erreicht wird. Wenn die Würste, wie oben beschrieben, hinsichtlich ihrer Krümmung in zwei Gruppen, also nach links oder rechts auf dem Förderelement getrennt und damit sortiert werden sollen, ist es besonders vorteilhaft, wenn der Abstand im Ausrichtbereich gleich oder etwas größer ist als das Kaliber der auszurichtenden Würste. Wenn eine Ausrichtung bzw. Sortierung, wie oben beschrieben, vorgenommen werden soll, bei denen die Würste im Wesentlichen quer zur Förderrichtung ausgerichtet werden sollen, bietet es sich vorteilhaft an, wenn der Abstand der Führungen im Ausrichtbereich im Wesentlichen etwas größer ist als die Länge der auszurichtenden Würste.

Zur Reduktion der Reibung zwischen Führung und Wurst ist gemäß einer bevorzugten alternativen Ausführungsform vorgesehen, dass das Führungselement ein umlaufendes sog. Endlosband ist, welches vorzugsweise motorisch antreibbar ist. Eine alternative Ausführungsform zeichnet sich dadurch aus, dass die Führung durch mehrere eine im Wesentlichen vertikale Drehachse aufweisende Führungs-Rollen ausgebildet ist, wobei vorzugsweise mehrere oder alle Rollen motorisch antreibbar sind. Mittels mehrerer vorzugsweise motorisch angetriebener Rollen lässt sich eine reibungsarme und damit für eine industrielle Produktion mit hoher Geschwindigkeit besonders geeignete Führung verwirklichen.

Eine weitere alternative Ausführungsform sieht vor, dass der sich ausbildende Winkel zwischen den Führungen der zwei beabstandeten Ausrichtvorrichtungen wenigstens abschnittsweise zueinander variierbar ist. Lässt sich beispielsweise zwischen den beabstandeten Führungen ein mehr oder weniger stark ausgeprägter spitzer Winkel einstellen, kann im Einzelfall, je nach Grad der Krümmung der Würstchen, eine besonders vorteilhafte Ausrichtung auf dem Förderelement erreicht werden, wobei die Ausrichtung entweder nach Richtung der Krümmung nach links oder rechts auf dem Band oder alternativ auch im Wesentlichen quer zur Förderrichtung auf dem Band erfolgen kann.

Gemäß einer besonders bevorzugten Ausführungsform wird vorgeschlagen, dass eine bezogen auf die Förderrichtung stromabwärts von den Ausrichtvorrichtungen angeordnete Trenneinrichtung zum Trennen der zuvor ausgerichteten Würste vorgesehen ist, die ein oberhalb des Förderelementes einer Fördereinrichtung angeordnetes in die Bewegungsbahn ragendes Trennelement aufweist. Mittels einer solchen Trenneinrichtung lassen sich die zuvor ausgerichteten Würste in zwei separate Gruppen sortieren, wobei die einen Würste, deren Krümmung nach rechts weist, nach rechts und die Würste, deren Krümmung nach links weist, weiter nach links gebracht werden. Das Trennelement kann ein im Wesentlichen mittig bezogen auf die beiden Führungen der Ausrichtvorrichtungen angeordnetes Trennelement, vorzugsweise ein Trennblech oder ein Trennelement aus Kunststoff sein. Die Trennwirkung wird besonders schonend ausgeführt, wenn vorzugsweise die Trenneinrichtung ein sich keilförmig erweiterndes Frontelement nach Art eines Pfluges aufweist.

Gemäß einer weiteren Ausführungsform wird vorgeschlagen, dass der Abstand der Führungen der Ausrichtvorrichtungen einstellbar ist, vorzugsweise mittels mindestens einer manuell oder motorisch antreibbaren Schraubspindel. Mittels einer Schraubspindel oder einer ähnlichen Einrichtung lassen sich die Führungen relativ einfach variieren. Aufgrund der Reibung einer Schraubspindel bedürfte es ggf. keiner separaten Feststelleinrichtung (Selbsthemmung).

Gemäß einer bevorzugten alternativen Ausführungsform ist eine Einrichtung zum Aufbringen eines flüssigen Gleitmittels auf das Förderelement und/oder die Würste vorgesehen, welche mindestens eine Abgabe-Düse für flüssiges Gleitmittel auf das Förderelement und/oder die Würste sowie eine mit einer Pumpe verbindbare Zuführleitung zum Zuführen des Gleitmittels zu der Düse aufweist. Ein solches flüssiges Gleitmittel, insbesondere Wasser sorgt zum einen für eine Reduktion der Reibung zwischen den Führungen und einer Wurst und zum anderen zwischen dem vorzugsweise endlos umlaufenden Förderelement und der Wurst, so dass die einzelnen Würste leicht auf dem Förderelement gleiten können, so dass die Ausrichtung mittels der Führungen mit geringen Kräften und damit schonend ausgeführt wird. Dabei kann eine einfache Düse oder auch Sprühdüse zum Aufsprühen von feinen Tröpfchen des Gleitmittels vorgesehen werden. Zweckmäßigerweise kann vorgesehen sein, dass mehrere Flüssigkeitsabgabe-Düsen mittels einer Zuführleitung mit Gleitmittel versorgbar und oberhalb des bewegbaren Förderelements an einer Haltevorrichtung angeordnet sind.

Die Erfindung löst gemäß eines weiteren Aspektes die Aufgabe ferner durch eine benachbart zu dem bewegbaren Förderelement angeordneten Anschlageinrichtung mit einem Anschlag zum temporären Stoppen einer oder mehrerer Würste auf ihrer Bewegungsbahn, welcher in die Bewegungsbahn hinein bzw. aus der Bewegungsbahn der Würste hinaus bewegbar ist, wobei der Anschlag mit zwei gegenüberliegenden Führungen, die die Wurst quer zur Förderrichtung ausrichten, kooperiert. Mittels eines derartigen erfindungsgemäßen Anschlages, der wenigstens teilweise in die Bewegungsbahn der Würstchen entlang der Förderrichtung hineinragt, treffen mehrere Würste auf den Anschlag und werden auf ihrer Bewegungsbahn gestoppt, während vorzugsweise das Förderelement weiterläuft. So können während dieses aktiven Stoppens mittels des Anschlages mehrere ausgerichtete Würste an dem Anschlag gruppiert werden. Sind also eine Reihe von Würsten, beispielsweise fünf Würste nebeneinander an dem Anschlag gestoppt und so gruppiert, kann der Anschlag aus der Bewegungsbahn in eine passive Stellung gebracht werden. Die gruppierten Würste werden gemeinsam weitertransportiert und dann beispielsweise mittels einer Verpackungsmaschine in eine Schale oder einen anderen Behälter eingelegt. Dieser Vorgang des Gruppierens mittels des Anschlags kann sich beliebig oft und in beliebiger Zahl einer Gruppe wiederholen. Besonders bevorzugt ist es, dass die Ausrichtvorrichtung mit Anschlag im Anschluss an eine Ausrichtvorrichtung mit zwei beabstandeten Ausrichtvorrichtungen mit Führungen, wie zuvor beschrieben, angeordnet ist, und so die beiden Ausrichtvorrichtungen miteinander kooperieren, weil so die Würste zunächst hinsichtlich ihrer Krümmung ausgerichtet und anschließend jeweils mittels des Anschlags gruppiert werden können.

Gemäß einer Weiterbildung wird vorgeschlagen, dass der Anschlag als sich im Wesentlichen quer zur Förderrichtung erstreckende Schiene ausgebildet ist, welche mittels einer Führungs- und Antriebseinrichtung in im Wesentlichen vertikaler Richtung in die oder aus der Bewegungsbahn bewegbar ist. So lässt sich der Anschlag einfach ausbilden und verfahren aus einer Passiv- in eine Aktivstellung.

Gemäß einer bevorzugten Weiterbildung wird vorgeschlagen, dass die Anschlageinrichtung als eine sich im Wesentlichen quer zur Bewegungsrichtung erstreckende Rolle mit mehreren Anschläge bildenden Vorsprüngen gebildet ist, die durch Drehung in die Bewegungsbahn der Würste hinein und aus der Bewegungsbahn heraus drehbar sind, wobei vorzugsweise die Rolle mit den Vorsprüngen motorisch antreibbar ist. Mittels einer derartigen Rolle mit mehreren von ihr abstehenden Anschlägen lässt sich eine reibungsarme und sehr schnelle Gruppierung verwirklichen. Die Rolle kann oberhalb des Förderelementes der Fördereinrichtung oder benachbart hierzu, beispielsweise stromabwärts angeordnet sein.

Gemäß eines weiteren Aspektes wird erfindungsgemäß ein System zum Ausrichten von Würsten vorgeschlagen, welches eine Vorrichtung zum Ausrichten zwei beabstandeten Ausrichtvorrichtungen mit Führungen (nach mindestens einem der Ansprüche 1 bis 9 und eine Vorrichtung zum Ausrichten mit Anschlag zum temporären Stoppen einer oder mehrerer Würste aufweist.

Gemäß einer bevorzugten Weiterbildung ist eine sich in Förderrichtung anschließende Verpackungsanlage vorgesehen zum Einlegen von Würsten in individuelle Verpackungen und zum Abtransportieren der gefüllten Verpackungen.

Ebenfalls ist besonders bevorzugt eine zum System gehörende vorgeschaltete Füllmaschine zum Herstellen einzelner Würste und einer Trenneinrichtung zum Trennen verbundener Würste und zur Übergabe an eine erfindungsgemäße Ausrichtvorrichtung.

Die Erfindung löst die Aufgabe desweiteren gemäß eines weiteren Aspektes mit einem Verfahren mit den Merkmalen des Anspruchs 10, bei dem einzelne Würste auf ein bewegbares, vorzugsweise umlaufendes Förderelement einer Fördereinrichtung aufgebracht werden, die Würste entlang einer Bewegungsbahn auf dem Förderelement transportiert werden, die Würste in eine Ausrichtvorrichtung zwischen zwei beabstandete Ausrichtvorrichtungen eingebracht werden, wobei der Abstand der Ausrichtvorrichtungen so gewählt ist, dass die gekrümmte Wurst durch die beabstandeten seitlichen Führungen elastisch verformt und dabei wenigstens etwas begradigt bzw. geradegebogen wird, während des weiteren Transportes entlang der Bewegungsbahn das vordere Ende der Wurst von den Führungen der beabstandeten Ausrichtvorrichtung freikommt, während ein hinterer Abschnitt der Wurst noch zwischen den Führungen verbleibt, die Wurst dann nach dem Freikommen aufgrund der Elastizität wenigstens teilweise wieder ihre zuvor stärker gekrümmte Form annimmt, und der vordere Abschnitt der Wurst dabei in eine Richtung quer zur Förderrichtung und damit wenigstens etwas quer zur Bewegungsbahn der Wurst bewegt wird.

Hinsichtlich der Vorteile des erfindungsgemäßen Verfahrens wird auf die obigen Beschreibungen der erfindungsgemäßen Ausrichtvorrichtung Bezug genommen, die auch auf das erfindungsgemäße Verfahren entsprechend zutreffend. Mittels der Erfindung lassen sich Würste hinsichtlich ihrer Krümmungsrichtung auf effektive und einfache Weise ausrichten und sortieren.

Gemäß einer Weiterbildung des Verfahrens das Zuführen der in Förderrichtung ausgerichteten Würste zu einer Trenneinrichtung und somit Sortieren der Würste in zwei Gruppen von Würsten mit gleichmäßig ausgerichteten Krümmungen vorgeschlagen. Hierbei kann es sich vorzugsweise um eine Trenneinrichtung nach einer der oben beschriebenen Ausführungsformen handeln.

Das Verfahren wird ferner weitergebildet derart, dass die Würste einem Anschlag zugeführt werden, an dem mindestens eine oder mehrere Würste temporär auf ihrer Bewegungsbahn gestoppt werden, und anschließend eine oder mehrere Würste anschließend gruppiert weitertransportiert und ggf. verpackt werden können.

Bei dem Verfahren werden die Würste vorzugsweise zunächst mittels einer Füllmaschine in einen Darm eingefüllt, anschließend mit einer Abdreheinrichtung abgedreht, anschließend mittels einer Trenneinrichtung vereinzelt und anschließend einer Ausrichtvorrichtung zugeführt, vorzugsweise einer Ausrichtvorrichtung nach mindestens einem der vorstehenden Ansprüche.

Die Erfindung ist nachstehend anhand bevorzugter Ausführungsbeispiele näher erläutert. Es zeigen:
Figur 1 ein System umfassend mehrere Maschinen sowie mindestens eine erfindungsgemäße Vorrichtung zum Ausrichten von Würsten in einer Seitenansicht;
Figur 2 eine erfindungsgemäße Vorrichtung zum Ausrichten in einer Seitenansicht;
Figur 3 die erfindungsgemäße Ausrichtvorrichtung in einer Frontansicht;
Figur 4 die erfindungsgemäße Ausrichtvorrichtung in einer Draufsicht;
Figur 5 die Vorrichtung gemäß Figur 4 in einer vergrößerten Draufsicht;
Figur 6 die Vorrichtung gemäß Figur 2 in einer perspektivischen Ansicht;
Figur 7 einen vergrößerten Ausschnitt aus Figur 6;
Fig. 8a) - 8f) ein erfindungsgemäßes Verfahren zum Ausrichten in mehreren Phasen;
Figur 9 das Verfahren in vergrößerter Darstellung;
Figur 10 das Verfahren in vergrößerter Darstellung;
Figur 11 ein erfindungsgemäßes Verfahren zum Ausrichten und Sortieren;
Figur 12 ein erfindungsgemäßes Verfahren zum Ausrichten und Sortieren mit dargestellter Einrichtung zum Aufbringen eines flüssigen Gleitmittels;
Figur 13 ein erfindungsgemäßes Verfahren zum Ausrichten und Sortieren mit dargestellter Einrichtung zum Aufbringen eines flüssigen Gleitmittels mit einer Ausrichtvorrichtung mit einer Führung mit umlaufenden Band;
Figur 14 ein erfindungsgemäßes Verfahren zum Ausrichten und Sortieren mit dargestellter Einrichtung zum Aufbringen eines flüssigen Gleitmittels mit einer Ausrichtvorrichtung mit einer Führungsschiene;
Figur 15 ein alternatives Ausführungsbeispiel einer Ausrichtvorrichtung zum Ausrichten und Gruppieren von Würsten quer zur Fahrtrichtung in einer perspektivischen Ansicht;
Figur 16 einen Teil einer erfindungsgemäßen Ausrichtvorrichtung mit Anschlageinrichtung in Form einer sich im Wesentlichen quer zur Bewegungsrichtung erstreckenden Rolle mit mehreren Anschläge bildenden Vorsprüngen in einer Seitenansicht;
Figur 17 die Vorrichtung aus Figur 16 in einer perspektivischen Ansicht;
Figur 18 ein alternatives Ausführungsbeispiel einer erfindungsgemäßen Ausrichtvorrichtung mit Anschlageinrichtung in Form eines sich im Wesentlichen quer zur Bewegungsrichtung erstreckenden Endlos-Bandes mit mehreren Anschläge bildenden Vorsprüngen in einer perspektivischen Ansicht;
Figur 19 ein alternatives Ausführungsbeispiel einer Ausrichtvorrichtung ähnlich dem im Figur 18 gezeigten Ausführungsbeispiel in perspektivischer Ansicht, jedoch mit einem glatten Endlos-Band ;
Figur 20 ein weiteres alternatives Ausführungsbeispiel einer Ausrichtvorrichtung mit Verstelleinrichtung zum Verstellen einer Trenneinrichtung in einer perspektivischen Ansicht;
Figur 21 einen vergrößerten Abschnitt aus Figur 20;
Figur 22 ein alternatives Ausführungsbeispiel einer erfindungsgemäßen Ausrichtvorrichtung mit zwei Ausrichtvorrichtungen mit seitlicher Führung in Form von angetriebenen Bändern zum Ausrichten von Würstchen quer zur Förderrichtung;
Figur 23 ein weiteres alternatives Ausführungsbeispiel einer erfindungsgemäßen Ausrichtvorrichtung mit zwei Ausrichtvorrichtungen mit seitlicher Führung mit mehreren angetriebenen Rollen zum Ausrichten von Würstchen quer zur Förderrichtung.

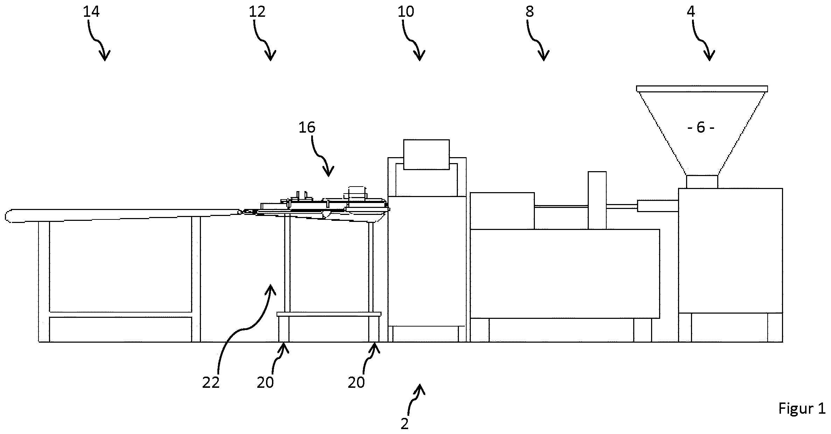

Das in Figur 1 gezeigte System 2 dient zur Herstellung und Verarbeitung von Portionen von Lebensmitteln, insbesondere länglichen Würsten 1. Das System 2 umfasst eine Füllmaschine 4 mit Fülltrichter 6 zum Aufnehmen einer pastösen Lebensmittelmasse wie Wurstbrät zum Einfüllen des Wurstbräts in einen Darm, insbesondere Naturdarm, weiterhin eine Abdreheinrichtung 8 zum Abdrehen und damit Herstellen von Abdrehstellen zwischen einzelnen Würsten 1, eine Trenneinrichtung 10 zum Herstellen einzelner Würste durch Trennen an den Abdrehstellen sowie mindestens eine Vorrichtung 12 zum Ausrichten von Würsten und/oder Sortieren von Würsten, nachfolgend auch als Ausrichtvorrichtung 12 bezeichnet, sowie eine Verpackungsmaschine 14 zum individuellen Einlegen von Würsten in individuelle Verpackungen und/oder zum Abtransportieren der gefüllten Verpackungen und/oder zum Abtransportieren ausgerichteter und/oder sortierter Würste. Füllmaschine 4, Abdreheinrichtung 8, Trenneinrichtung 10 und Verpackungsmaschine 14 können je nach Anwendung, beispielsweise Qualität der Würste, ausgewählt und zusammengestellt und mit einer oder mehrerer Ausrichtvorrichtung(en) 12 kombiniert werden. Einzelne Würste werden der Ausrichtvorrichtung 12 zugeführt und nach der Ausrichtung bzw. Gruppierung bzw. Sortierung mittels der Verpackungsmaschine 14 abtransportiert und ggf. verpackt. Einzelne Würste sind in einigen der nachfolgenden Figuren mit den Bezugszeichen 1 gekennzeichnet.

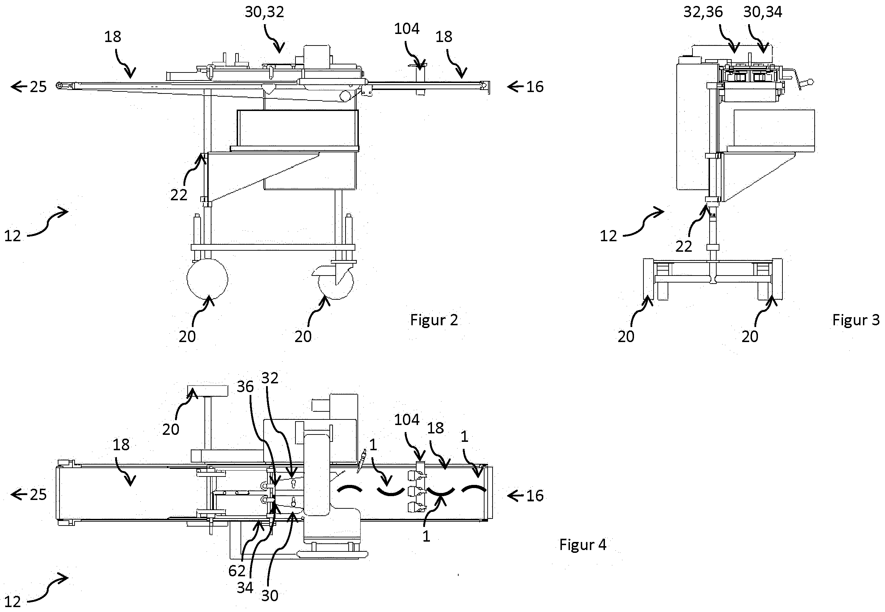

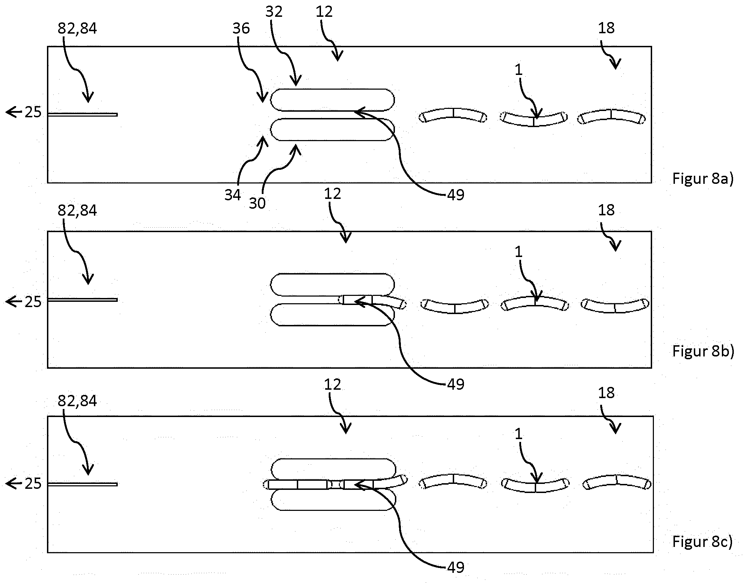

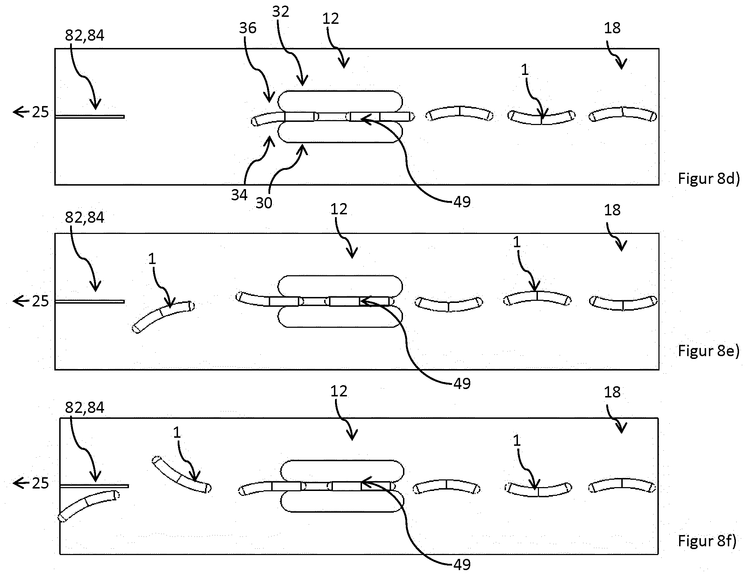

In dem in Figuren 2 bis 7 gezeigten Ausführungsbeispiel der Ausrichtvorrichtung 12 ist eine Fördereinrichtung 16 mit einem bewegbaren, umlaufenden Förderelement 18 in Form eines Endlosbandes an einem auf mehrere Rollen 20 verfahrbaren Maschinengestell 22 angeordnet. Das mittels eines Elektromotors (nicht gezeigt) über mindestens eine angetriebene Rolle bewegbare Förderelement 18 ist mit ihrem jeweils oberen Abschnitt in eine Förderrichtung 25, dargestellt durch Pfeil, bewegbar. Einzelne Würste 1 sind, wie z. B. die Figuren 8 zeigen, auf das als Endlosband ausgebildete Förderelement 18 auflegbar und in Förderrichtung 25 transportierbar entlang einer Bewegungsbahn. Die effektive Länge des Förderelementes 18 lässt sich optional variieren. Weitere Bestandteile der Fördereinrichtung 16 sind mehrere Rollen, ein Antriebsmotor, insbesondere ein Elektromotor, eine dazugehörige Steuerung sowie Rahmenelemente; sie sind dem Fachmann bekannt und hier nicht näher erläutert.

Die Ausrichtvorrichtung 12 weist zwei im Wesentlichen quer zur Förderrichtung 25 voneinander beabstandete und oberhalb der Förderelemente 18 angeordnete Ausrichteinrichtungen 30, 32 mit jeweils einer oberhalb des Förderelementes 18 angeordneten Führung 34, 36 auf, die zum Führen und damit Ausrichten einzelner Würste 1 auf ihrer individuellen Bewegungsbahn auf dem Förderelement 18 dienen. Die Ausrichteinrichtungen 30, 32, insbesondere deren Führung 34, 36 sind so voneinander beabstandet, dass eine einzelne Wurst 1 dazwischen gelangen und geführt bzw. ausgerichtet werden kann, während eine Wurst 1 entlang ihrer individuellen Bewegungsbahn im Wesentlichen in Förderrichtung 25 des Förderelementes 18 transportiert und bewegt wird. Die Führungen 34, 36 sind dabei gegenüberliegend mit einem Abstand zueinander und einem Zwischenraum oberhalb des Förderelements 18 angeordnet. Im gezeigten Ausführungsbeispiel sind die Führungen 34, 36 länglich, d. h. sie erstrecken sich nicht notwendigerweise nur, aber auch und bevorzugt im Wesentlichen in Richtung der Förderrichtung 25. Im Ausführungsbeispiel sind die Führungen 34, 36 gegenüberliegend und gleich lang ausgebildet; Abweichungen hiervon sind erfindungsgemäß auch denkbar, d. h. unterschiedlich lange in Förderrichtung 25 gesehen an unterschiedlichen Positionen angeordnete Führungen 34, 36 sind auch möglich.

In diesem Ausführungsbeispiel weist jede Führung 34, 36 ein umlaufendes FührungsBand 38, 40 auf, welche zwischen mindestens zwei Rollen mit im Wesentlichen vertikaler Drehachse gespannt und mittels mindestens einer angetriebenen Rolle antreibbar ist, so dass der innere Abschnitt des Führungs-Bandes 38, 40 sich im Wesentlichen oder wenigstens mit einer Bewegungskomponente wenigstens teilweise in Förderrichtung 25 bewegt. Die Geschwindigkeit des Führungs-Bandes 38, 40 ist mittels einer Steuerung (nicht gezeigt, aber einem Fachmann hinlänglich bekannt) einstellbar und an die Geschwindigkeit des Förderelementes 18 der Fördereinrichtung 16 anpassbar. Vorzugsweise sind die Geschwindigkeiten im Betrieb gleich oder unterscheiden sich nicht sehr stark voneinander.

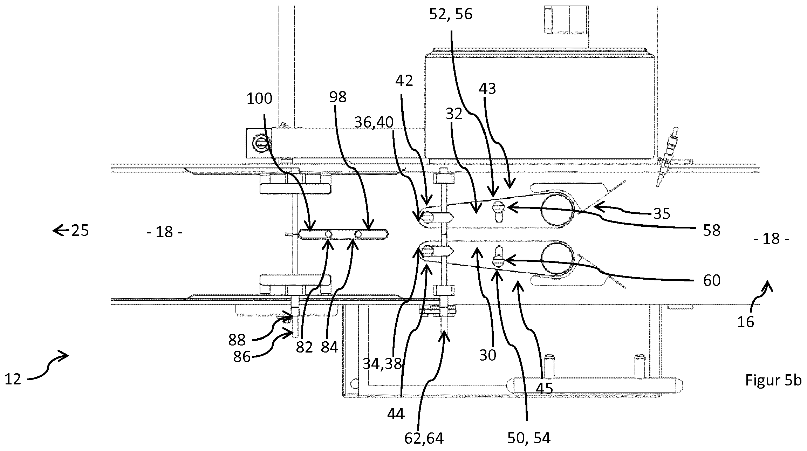

Wie die Figuren 5b veranschaulichen, sind die in Förderrichtung 25 gesehenen hinteren Umlenkrollen 42, 44 nicht angetrieben. Die in Förderrichtung 25 gesehenen vorderen Antriebsrollen sind motorisch antreibbar. Hierzu sind in nicht näher dargestellter Weise mechanische Antriebswellen, ggf. unter Zwischenschaltung von Getrieben oder alternativ hydraulische oder elektrische Antriebe möglich.

Die Spannrollen 43, 45 zum weiteren Justieren der Führungsbänder 38, 40 sind entlang der Schlitze 54, 56 über die Halteelemente 50, 52 verschiebbar und mittels Fixierschrauben 58,60 feststellbar.

Durch Verstellen der Positionen der Rollen 43, 45 lässt sich die Führung 34, 36, realisiert mit Band 38, 40 in unterschiedlichen Winkeln relativ zur Förderrichtung 25 einstellen.

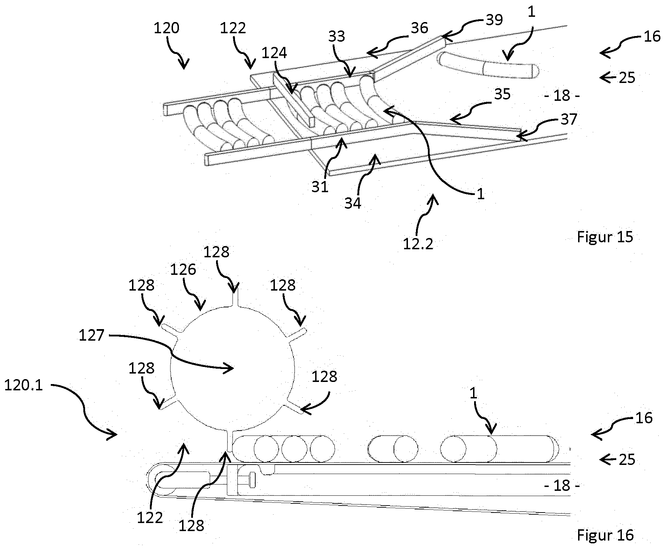

Die Länge der Führungen 34, 36 und deren Abstand ist variabel und an die Längen und Kaliber der Würste 1 anpassbar. In diesem Ausführungsbeispiel entspricht die Länge einer Führung im Wesentlichen mindestens der Länge einer durchschnittlichen Wurst, und der Abstand entspricht mindestens in etwa dem durchschnittlichen Kaliber einer Wurst 1. Hier werden die Würste 1 zwischen die Führungen 34, 36 transportiert, wobei die Längsachsen der Würste 1 im Wesentlichen parallel zur Förderrichtung 25 ausgerichtet und somit die Würste 1 längs zwischen die Führungen 34, 36 transportiert werden. Alternativ kann, wie unten anhand alternativer Ausführungsbeispiele und der Figuren 15 bis 23 veranschaulicht, der Abstand der Führungen 34, 36 der Ausrichteinrichtungen 30, 32 auch so gewählt werden, dass eine Wurst 1 im Wesentlichen quer zur Förderrichtung 25 zwischen zwei Führungen 34, 36 ausgerichtet wird.

Der Motor, insbesondere ein Elektro- oder Hydraulikmotor für den hinteren Rollen 42, 44 zum Antreiben der Führungs-Bänder 38, 40, ist nicht näher dargestellt. Alternativ ist im ganz vorderen Bereich, in Förderrichtung 25 gesehen, in nicht dargestellter Weise eine dritte Antriebsrolle vorgesehen, die mittels eines Motors und eines Getriebes und Antriebselementen angetrieben wird, wobei der Motor in dem Gehäuse 78 und die Antriebselemente wenigstens teilweise in dem Gehäuse 80 angeordnet sein können.

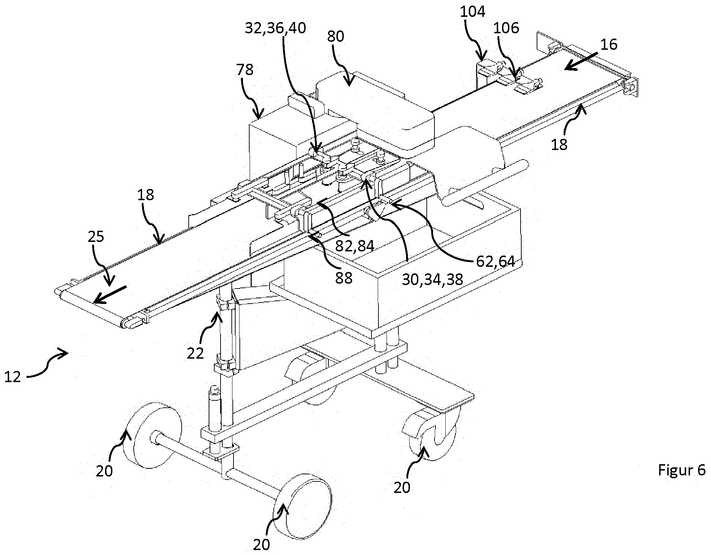

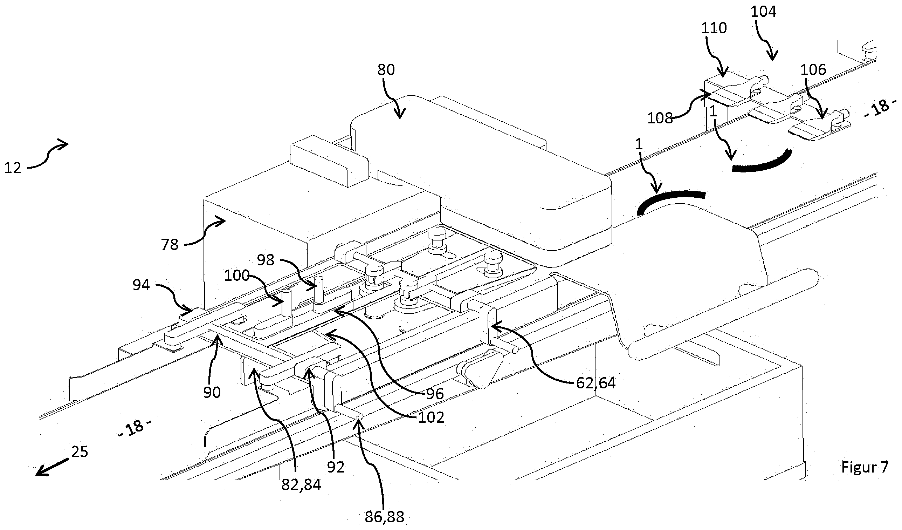

Mittels einer Verstelleinrichtung 62 (siehe Fig. 6 oder 7) lässt sich der Abstand der hinteren Rollen 42, 44 und damit der Abstand der Führungen 34, 36 verstellen. Die Verstelleinrichtung 62 weist hierzu eine Handkurbel 64, eine Schraub-Spindel 66, die wenigstens teilweise mit einem Außengewinde ausgebildet ist, sowie je einen Verstell-Block 68, 70, jeweils versehen mit einem Innengewinde, das mit dem Außengewinde der Spindel 66 kämmt, auf, wobei an jedem Block 68, 70 die Aufnahmemittel für die hintere Rolle 42 bzw. 44 befestigt ist. Die Spindel 66 ist an Lagerblöcken 72, 74 drehbar gelagert. Mittels der Verstelleinrichtung 62, die auch mit anderen technischen Mitteln gebildet sein kann, lässt sich der Abstand der Führungen 34, 36 zueinander vereinfacht verstellen. In nicht dargestellter Weise könnten auch die vorderen Rollen 46, 48 mittels der Verstelleinrichtung 62 oder einer eigenen Verstelleinrichtung (nicht gezeigt) verstellbar ausgebildet sein, wobei auch diese Verstelleinrichtung manuell, beispielsweise mit einer Handkurbel oder auch motorisch ausgebildet sein könnte.

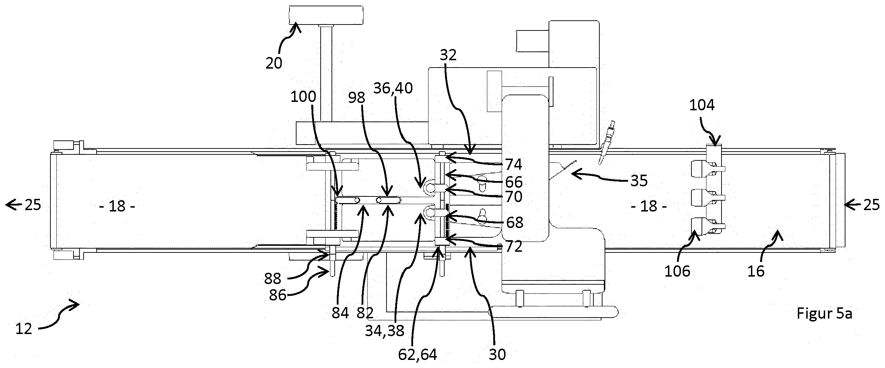

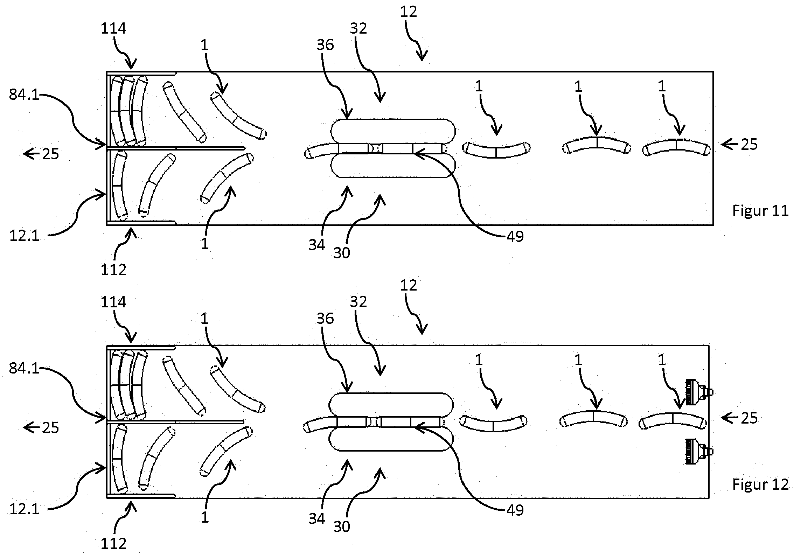

Wie die Figuren 5 bis 7 zeigen, ist eine Trenneinrichtung 82 zum Trennen von einzelnen Würsten 1, die im wesentlichen in Förderrichtung 25 auf dem Förderelement 18 transportiert werden, in zwei Gruppen vorgesehen. Die Trenneinrichtung 82 ist bevorzugt stromabwärts - bezogen auf die Förderrichtung 25 - von einer Ausrichtvorrichtung 12 mit ihren beiden kooperierenden Ausrichteinrichtungen 30, 32 angeordnet. Zuvor ausgerichtete Würste 1 gelangen so in den Einflussbereich der Trenneinrichtung 82. Die Trenneinrichtung 82 weist ein Trennelement 84 auf, welches oberhalb des Förderelementes 18 (in Form eines Endlos-Bandes) der Fördereinrichtung 16 angeordnet und in die Bewegungsbahn der Würste 1 hineinragt. Das Trennelement 84 kann als flaches Element, in Form eines Bleches, eines Kunststoffelementes, beispielsweise einer Platte aus PTFE, und/oder nach Art eines Pfluges ausgebildet sein. Wie in den Figuren gezeigt und bevorzugt, ist das Trennelement 84 mittig bezogen auf die Führungen 34, 36 der Ausrichteinrichtungen 30, 32 angeordnet. Würste 1, die mittels der Ausrichtvorrichtung 12 ausgerichtet worden sind (nachfolgend auch anhand von Figur 8 erläutert), gelangen so in den Einflussbereich des Trennelements 84 und werden von diesem auf dem Förderelement 18 entweder etwas nach links, gesehen in Förderrichtung 25, oder nach rechts gelenkt. So entstehen zwei Gruppen oder Ströme von Würsten 1, die wenigstens etwas links bzw. rechts von dem Trennelement 84 auf dem Förderelement 18 weiter transportiert werden. Die so getrennten Ströme von Würsten 1 (mehr links oder mehr rechts auf dem Förderelement 18) sind somit sortiert worden. Sie können anschließend jeweils einer weiteren Ausrichtvorrichtung 12, insbesondere einer nachfolgend näher erläuterten mit Anschlageinrichtung 122, zugeführt und dort gruppiert oder individuell weiterverarbeitet werden, beispielsweise verpackt oder gruppiert werden. Hierzu können auch und insbesondere die Ausführungsbeispiele der Ausrichtvorrichtungen 12 gemäß den Figuren 11 bis 23 verwendet werden.

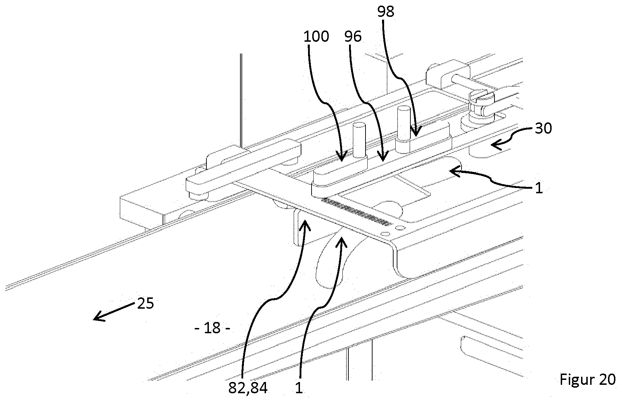

Die Trenneinrichtung 82 (siehe z.B. Figuren 5-7 oder 20-21) weist eine Verstelleinrichtung 86 zum Bewegen und Verstellen des Trennelements 84 in Richtung der Förderrichtung 25 auf, siehe insbesondere Figur 7. in nicht dargestellter, alternativer Weise wäre es auch möglich, dass das Trennelement 84 in verschiedene Positionen quer zur Förderrichtung 25 bewegt und in verschiedenen Positionen feststellbar ist. Die Verstelleinrichtung 86 weist eine erste Handkurbel 88, eine erste Spindel 90 (siehe Figur 7) sowie LagerBöcke 92, 94 auf, die derart zusammenwirken, dass das Trennelement 84 seitlich oder quer - bezogen auf die Förderrichtung 25 - verstellbar ist. Hierzu kooperiert ein Halteglied 96 in Form eines längliches Stabes mit einem Gewinde der Spindel 90. Ferner lässt sich das Trennelement 84 mittels zweier weiterer Handkurbeln 98, 100 (Fig. 7, Fig. 20) in verschiedenen Stellungen - längs oder axial bezogen auf die Förderrichtung 25 - relativ zu dem Halteglied 96 und damit relativ zu der Ausrichtvorrichtung 12 in unterschiedlichen Abständen verfahren und in einer eingestellten Stellung fixieren. Somit ist das Trennelement 84 längs zur Förderrichtung 25 in verschiedene Stellungen bewegbar und in diesen fixierbar. So lässt sich die Trenneinrichtung 82 optimal in Relation zu den Eigenschaften der Würste 1 einstellen. Die Trenneinrichtung 82 kann alternativ auch ein sich keilförmig erweiterndes Frontelement aufweisen oder, wie dargestellt, eine sich schräg von unten nach oben in Förderrichtung 25 erstreckende Frontfläche 102 aufweisen.

Eine Einrichtung 104 (Fig. 4 bis 7) dient zum Aufbringen eines flüssigen Gleitmittels wie insbesondere Wasser auf das Förderelement 18 und/oder die Würste 1 und weist mindestens eine Abgabe-Düse 106, hier drei Abgabe-Düsen 106 zum Abgeben des flüssigen Gleitmittels auf. Jede Düse 106 weist eine oder mehrere Öffnungen 108 auf, mit denen das Gleitmittel (Wasser) abgegeben oder vorzugsweise gesprüht werden kann, sodass Wasser auf das Förderelement 18 und/oder die Würste 1 gelangt. So wird die Reibung zwischen den Würsten 1 und Förderelement 18 und den Würsten 1 und weiteren Elementen der Ausrichtvorrichtung 12 oder der Trenneinrichtung 82 oder anderen Komponenten verringert, was der Ausrichtung der Würste 1 und/oder der Gruppierung und/oder Sortierung förderlich ist. Die Würste 1 lassen sich mit geringen Kräften auf dem Förderelement 18 bewegen und ausrichten. Die Düsen 106 sind in nicht näher gezeigter Weise mit Schläuchen und/oder Rohrleitungen mit mindestens einer Pumpe gekoppelt, die aus einer Gleitmittelquelle oder einem Gleitmittelbehälter das Gleitmittel zu den Düsen 108 fördern kann. Die Pumpe ist mittels eines Elektromotors, der von der Steuerung angesteuert wird, steuerbar. Die Düsen 106 sind an einer Halterung in Form eines Trägers 110 an dem Gestell 22 befestigt.

Die Figuren 8a) bis 8f) veranschaulichen die Ausrichtvorrichtung 12, die Trenneinrichtung 82 sowie ein Verfahren zum Ausrichten von Würsten 1 und/oder Sortieren mittels einer Ausrichtvorrichtung 12 und mittels einer Trenneinrichtung 82 mit einem Trennelement 84. Einzelne Würste 1 werden in Förderrichtung 25 in den Figuren von rechts nach links mittels des Förderelementes 18, auf denen die Würste 1 aufliegen, transportiert, vergleiche Figur 8a). Eine einzelne Wurst 1 gelangt, wie in Figur 8b) gezeigt, in den Einflussbereich der Ausrichtvorrichtung 12 und mit ihrem vorderen Abschnitt zwischen die Führungen 34, 36 der Ausrichteinrichtungen 30, 32. Die Würste 1 sind in etwa in Förderrichtung 25 längs ausgerichtet. Die gekrümmten Würste 1 werden aufgrund des gewählten Abstandes zwischen den Führungen 34, 36 wenigstens etwas begradigt und verformen dabei wenigstens teilweise oder im Wesentlichen elastisch, vgl. Fig. 8c). Manche Würste 1 sind mit ihrer Krümmung nach links, manche nach rechts bezogen auf die Förderrichtung 25 auf dem Förderelement 18 liegend. Demgemäß werden die Würste 1 in der Ausrichtvorrichtung 12 unterschiedlich verformt. Im weiteren Verlauf, siehe z. B. Figur 8c), 8d), gelangt der vordere Abschnitt einer Wurst 1 aus dem Einflussbereich und aus dem Zwischenraum zwischen den Führungen 34, 36 heraus und wird entsprechend der Richtung der Krümmung wieder rückverformt aufgrund der Elastizität der Wurst 1, siehe Figur 8d, beispielsweise etwas nach links bezogen auf die Förderrichtung 25. Die vordere Wurst 1 wird aufgrund der Rückverformung aufgrund der Elastizität dann wenigstens etwas nach links bezogen auf die Förderrichtung 25 auf dem Förderelement 18 bewegt, siehe Figur 8e). Die vordere Wurst 1 wird im Einflussbereich der Trenneinrichtung 82 definiert weiter nach links in eine linke Gruppe von Würsten 1 auf dem Förderelement 18 gebracht, siehe Figur 8e). Eine solche Wurst 1 wird dann weiter mithilfe der Trenneinrichtung 82 weiter nach links bewegt und sortiert; Würste mit einer solchen Krümmung werden also in eine Gruppe - links - sortiert. Eine andere Wurst, deren Krümmung in die andere Richtung weist, wird, wie z.B. Figur 8f) zeigt, beim Herausbewegen aus dem Einflussbereich der Führungen 34, 36 etwas nach rechts aufgrund der Elastizität auf dem Förderelement 18 bewegt. Infolgedessen wird diese Wurst 1 eher nach rechts bezogen auf die Förderrichtung 25 ausgerichtet. Mittels der Trenneinrichtung 82 wird sie dann weiter definiert in eine rechte Gruppe von Würstchen ausgerichtet und sortiert. So wird eine Ausrichtung der Würstchen und Sortierung oder Gruppierung je nach Richtung der Krümmung vorgenommen.

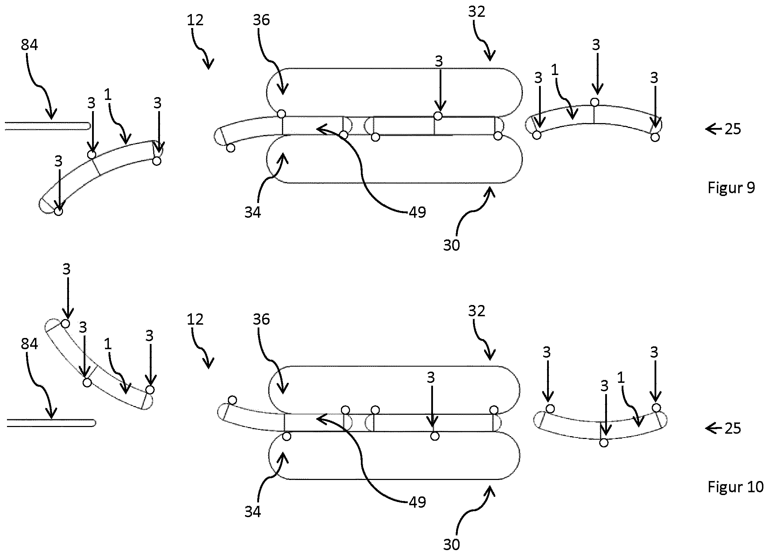

Figuren 9 und 10 veranschaulichen vergrößert die Sortierung mit Hilfe von - idealisierten - drei Kontakt-Punkten zwischen Wurst 1 und Führung 34, 36 aufgrund der Krümmung bzw. Elastizität einer Wurst 1. In Figur 9 ist die Wurst 1 - nach links - so gekrümmt, dass der dort obere Punkt 3 nach oben weist und zwei Punkte 3 nach unten. Die Punkte 3 könnten auch als Kontaktpunkte 3 bezeichnet werden, da sie während des Prozesses in Kontakt mit den Führungen 34, 36 der Ausrichteinrichtungen 30, 32 kommen. Diese nach links bezogen auf die Förderrichtung 25 gekrümmte Wurst gelangt in den Zwischenraum zwischen die Führungen 34, 36 und wird etwas begradigt. Im weiteren Verlauf gelangt aufgrund der Elastizität der vordere Abschnitt etwas weiter nach unten, sodass die Wurst nach links auf dem Förderelement 18 bewegt und mittels des Trennelements 84 der Trenneinrichtung 82 weiter definiert nach links ausgerichtet bzw. sortiert wird. Wie Figur 10 zeigt, ist eine andere Wurst, deren Krümmung nach rechts weist, vor der Ausrichtvorrichtung 12 so ausgerichtet, dass der Punkt 3 in der Mitte der Wurst nach unten weist, während die zwei Punkte 3 an den Enden der Wurst nach oben weisen. Auch diese Wurst wird etwas begradigt durch die Führungen 34, 36. Wenn die Wurst 1 von den Führungen 34, 36 freikommt, wird sie sich aufgrund ihrer Elastizität etwas nach rechts mit ihrem vorderen Bereich ausrichten, sodass die Wurst insgesamt nach rechts auf dem Förderelement 18 bewegt wird. Sie kann dann anschließend definiert von dem Trennelement 84 der Trenneinrichtung 82 in eine rechte Gruppe von Würsten ausgerichtet bzw. sortiert werden. Bei diesem Effekt spielt auch eine Rolle, dass zunächst der vordere Abschnitt der Wurst 1 von den Führungen 34, 36 freikommt und aufgrund der Elastizität und der Richtung der Krümmung in eine Richtung aus lenkt, während der hintere Abschnitt noch zwischen den Führungen 34,36 ist und geführt wird und sich nicht bewegen kann außer in Förderrichtung 25.

Die Figuren 11 und 12 veranschaulichen das Ausrichtverfahren weiter. Die Würste 1 werden - wie beschrieben - entsprechend ihrer jeweiligen Krümmung etwas nach links bzw. rechts (in den Figuren nach oben oder unten) ausgerichtet und gruppiert. Die linke und rechte Gruppe besteht dann aus Würsten 1 mit einer gleichen Krümmung bzw. Richtung der Krümmung. Somit sind zwei Gruppen aus Würstchen mit jeweils gleicher Krümmung gebildet. Zusätzlich zu dem Trennelement 842.1 ist, siehe Figuren 11 und 12, ganz rechts bzw. beabstandet ganz links jeweils ein weiteres Führungselement 112, 114 in Form beispielsweise einer Führungsstange oder eines Führungsbleches oder einer Führungsplatte beabstandet von dem Trennelement 84.1 angeordnet, sodass die Würste in ihrer jeweiligen Gruppe so geführt und ausgerichtet werden, dass sie anschließend, wie die Figuren zeigen, nicht nur hinsichtlich ihrer Krümmung, sondern auch im Wesentlichen quer zur Förderrichtung 25 ausgerichtet sind. Durch das Trennelement 84.1 mit jeweils einem Führungselement 112 bzw. 114 ist eine individuelle weitere Ausrichtvorrichtung 12.1 gebildet, die stromabwärts von der Ausrichtvorrichtung 12 angeordnet ist. So können die Würste zunächst nach links und rechts ausgerichtet und anschließend in jeweils ihrer Gruppe mit homogener Krümmung in eine linke bzw. rechte Gruppe mittels der Ausrichtvorrichtung 12.1 ausgerichtet werden. Die Ausrichtvorrichtung 12.1 stellt jeweils ein alternatives Ausführungsbeispiel einer erfindungsgemäßen Ausrichtvorrichtung mit zwei Führungen dar, gebildet jeweils durch das Trennelement 84.1 und das Führungselement 112 bzw. 114.

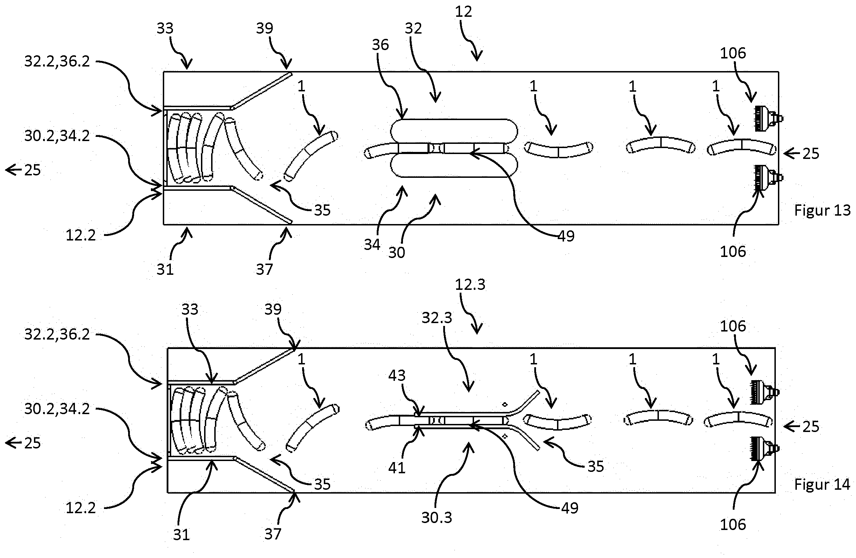

Figur 13 zeigt eine erfindungsgemäße Ausrichtvorrichtung 12 und ein Ausrichtverfahren wie zuvor beschrieben, und es wird vollumfänglich auf die obigen Beschreibungen Bezug genommen. Eine alternative zusätzliche erfindungsgemäße Ausrichtvorrichtung 12.2 weist zwei beabstandete Ausrichteinrichtungen 30.2 bzw. 32.2 auf. Die Ausrichteinrichtung 30.2 weist eine Führung 34.2 in Form einer starren Schiene 31 auf. Die Ausrichteinrichtung 32.2 weist eine Führung 36.2 in Form einer starren Schiene 33 auf. Die Schienen 31, 33 sind in etwa so beabstandet wie eine Länge einer Wurst 1 bzw. etwas stärker als eine Länge beabstandet. Die Führungen 34.2, 36.2 weisen auf bzw. bilden einen Zuführbereich 35, der durch zwei starre in einem spitzen Winkel zueinander angeordneter Führungen 37, 39 begrenzt und definiert wird und sich in Förderrichtung 25 verjüngt. Anschließend an den Zuführbereich 35 (siehe Figur 14) ist ein Ausrichtbereich 49 gebildet, in dem die Würstchen 1 wie zuvor beschrieben ausgerichtet werden, sodass sie anschließend entsprechend ihrer Krümmung und im Wesentlichen quer zur Förderrichtung ausgerichtet nebeneinander liegen.

Das in Figur 14 gezeigte Ausführungsbeispiel entspricht im Wesentlichen dem zuvor anhand von Figur 13 beschriebenen, und insoweit wird vollumfänglich auf die obigen Beschreibungen Bezug genommen. Die hier gezeigte Ausrichtvorrichtung 12.3 unterscheidet sich von den zuvor beschriebenen Ausrichtvorrichtungen 12 im Wesentlichen dadurch, dass statt Führungs-Bändern 38, 40 die Führungen 34, 36 durch starre Schienen 41, 43 gebildet sind, die jeweils wesentlicher Teil einer Ausrichteinrichtung 30.3, 32.3 sind. Die Würste 1 gelangen zwischen Schienen 41, 43, deren Abstand in etwa an das Kaliber der Würste 1 angepasst ist und werden in dem Zwischenraum wenigstens etwas begradigt und nach dem Durchlaufen der Schienen 41, 43 entsprechend ihrer Krümmung ausgerichtet. Sie gelangen dann in den Einflussbereich der Ausrichtvorrichtung 12.2 und werden dort im Wesentlichen quer zur Förderrichtung 25 ausgerichtet. Die Führungen 41, 43 sind in ihrem vorderen Abschnitt so verlaufend, dass sie einen Zuführbereich 35 nach Art eines Trichters aufweisen, um die Würste 1 besser zuzuführen.

Figur 15 zeigt eine Ausrichtvorrichtung 120 mit Anschlageinrichtung 122 mit einem Anschlag 124. Hinsichtlich gleicher oder ähnlicher Teile wird auf die obigen Beschreibungen der vorherigen Ausführungsbeispiele Bezug genommen. Eine Fördereinrichtung 16 mit einem bewegbaren Förderelement 18, insbesondere in Form eines umlaufenden Endlos-Bandes, auf die einzelne Würste 1 auflegbar sind, dient zum Transportieren der einzelnen Würste 1 in Förderrichtung 25. Eine Anschlageinrichtung 122 mit einem Anschlag 124 dient zum temporären Stoppen einer oder mehrerer Würste auf ihrer Bewegungsbahn. Der Anschlag 124 ist in die Bewegungsbahn hinein bzw. aus der Bewegungsbahn der Würste 1 heraus bewegbar. Im Ausführungsbeispiel ist der Anschlag 124 hierzu im Wesentlichen vertikal von oben nach unten bewegbar ausgebildet. Der Anschlag 124 ist hierzu vorzugsweise seitlich in nicht gezeigten Führungen geführt. Er lässt sich mit einer Antriebseinrichtung vertikal nach oben und unten bewegen. Figur 15 veranschaulicht einen derartigen erfindungsgemäßen bewegbaren Anschlag 124 schematisch. Der Fachmann kennt verschiedene Mittel zum Auf- und Abbewegen des Anschlages 124 und zum entsprechenden Führen.

Befindet sich der Anschlag 124 in einer Stellung zum Stoppen, in der er in die Bewegungsbahn der Würste 1 hineinragt, so werden einzelne Würste 1 gestoppt an dem Anschlag 124. Das Förderelement 18 kann dabei weiter in Förderrichtung 25 bewegt werden. Vorzugsweise ist ein Gleitmittel in Form eines Wassers auf die zuvor beschriebene Weise auf das Förderelement 18 aufgebracht worden mittels einer Einrichtung 104 (Fig. 4 bis 7). In der gestoppten Stellung bewegt sich das Förderelement 18 also unterhalb der Würste 1 weiter. Die einzelnen Würste sind zuvor mittels einer erfindungsgemäßen Ausrichtvorrichtung 12.2, vgl. auch Figur 14, mit Hilfe zweier Führungen 34, 36 in Form von starren Schienen 31, 33, ausgerichtet worden. Ausrichtvorrichtung 12.2 und Ausrichtvorrichtung 120 mit Anschlagseinrichtung 122 mit Anschlag 124 wirken bei dem Ausführungsbeispiel gemäß Figur 15 zusammen. Die einzelnen Würste 1 werden erfindungsgemäß ausgerichtet, in einer Stellung im Wesentlichen quer zur Förderrichtung 25. Sie werden mittels des Anschlages 124 temporär gestoppt, sodass sich eine Gruppe von ausgerichteten Würsten an und vor dem Anschlag 124 bildet. Die Würste 1 sind somit dicht beabstandet zueinander angeordnet. Wird der Anschlag 124 nun aus der Bewegungsbahn heraus, beispielsweise nach oben, bewegt, wird die Gruppe ausgerichteter Würste 1 dann von dem Förderelement 18 weiter in Förderrichtung 25 transportiert, und zwar als Gruppe, wie in Figur 15 links gezeigt (vier Würste nebeneinander). Die Gruppe von Würsten 1 kann dann anschließend in eine Verpackung, beispielsweise eine Schale, abgelegt werden.

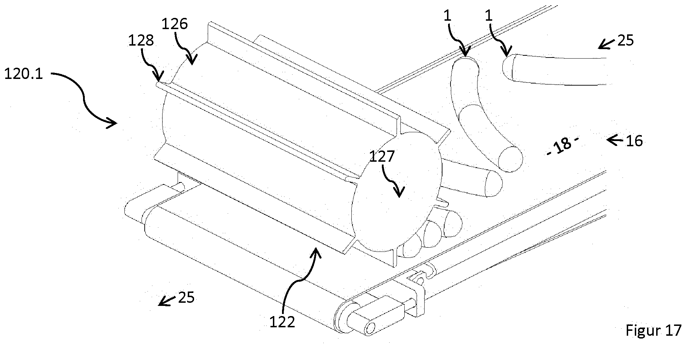

Die Figuren 16 und 17 zeigen ein alternatives Ausführungsbeispiel einer Ausrichtvorrichtung 120.1, und es wird hinsichtlich gleicher oder im Wesentlichen gleicher Teile auf die vorherige Beschreibung des Ausführungsbeispiels 120 Bezug genommen. Die Anschlageinrichtung 122 weist hier eine Rolle oder Walze 126 auf, die drehbar um eine Drehachse 127 gelagert ist und an ihrem Umfang mehrere einzelne Anschläge bildende Vorsprünge 128 aufweist. Durch Drehen der Rolle 126 kommen jeweils Vorsprünge 128 in die Bewegungsbahn der Würste 1 hinein bzw. aus der Bewegungsbahn heraus. Die Rolle 126 ist motorisch mittels eines Elektromotors oder dergleichen antreibbar und mittels der Steuerung steuerbar. Befindet sich ein Vorsprung 128 in der Bewegungsbahn, werden eine oder mehrere Würste 1 an dem Vorsprung 128 gestoppt, Figur 16. So werden mehrere Würste gruppiert. Die gruppierten Würstchen können dann durch Weiterdrehen der Rolle 126 freigegeben und weitertransportiert werden.

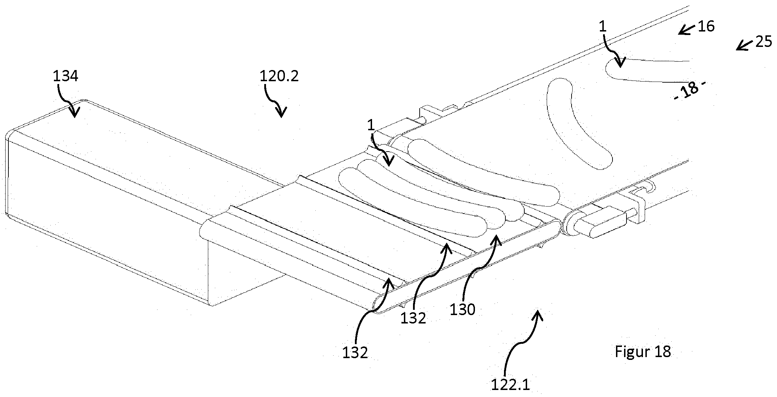

Die in Figur 18 gezeigte Ausrichtvorrichtung 120.2 mit einem Anschlag ähnelt dem zuvor beschriebenen Ausführungsbeispiel gemäß Figur 17, und insoweit wird auf die obigen Beschreibungen Bezug genommen. Die Anschlageinrichtung 122.1 unterscheidet sich von der zuvor beschriebenen Anschlageinrichtung 122 dadurch, dass hier ein umlaufendes Endlos-Band 130 mehrere Vorsprünge 132 aufweist, die jeweils einen Anschlag zum temporären Stoppen einer oder mehrerer Würste 1 bilden. Das Band 130 ist mittels mehrerer, nicht im Detail gezeigter Rollen geführt und angetrieben. Ein Antriebsmotor (nicht gezeigt) ist in einem Gehäuse 134 untergebracht und mit mindestens einer der Rollen gekoppelt. Das Band 130 ist im Anschluss an das Förderelement 18 in Form eines Endlos-Bandes der Fördereinrichtung 16 stromabwärts in Förderrichtung 25 angeordnet. Zum Stoppen einer oder mehrerer Würste 1 wird ein Vorsprung 132 in eine bestimmte Position gefahren und das Endlos-Band 130 angehalten. Dann werden mehrere Würste 1, gestoppt von den Vorsprüngen 132, ausgerichtet, und zwar im Wesentlichen quer zur Förderrichtung 25. Wenn eine Anzahl von Würsten 1 sich beispielsweise noch auf dem Band 16 liegend gruppiert haben, kann das Endlos-Band 130 eingeschaltet und die gruppierten Würste weiter transportiert werden in Förderrichtung 25, beispielsweise zu einer Verpackungsmaschine 14 (Fig. 1).

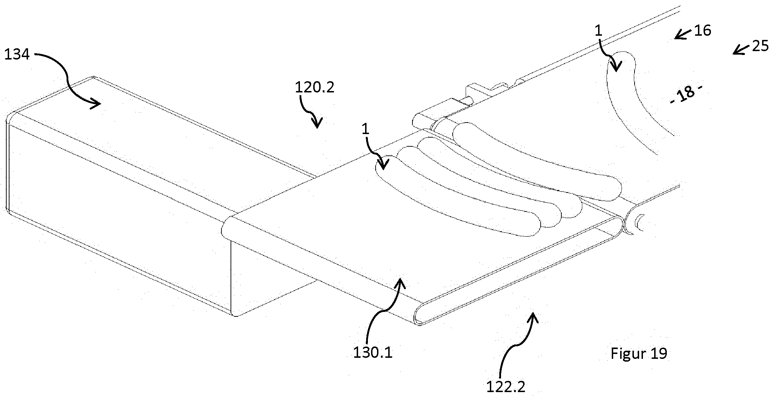

Figur 19 ähnelt dem zuvor anhand von Figur 18 beschriebenen Ausführungsbeispiel, und insoweit wird vollumfänglich auf die obigen Beschreibungen und Bezugszeichen Bezug genommen. Das Endlos-Band 130.1 weist nur keine jeweils einen Anschlag bildende Vorsprünge 132 auf, sondern ist im Wesentlichen eben ausgebildet. Dadurch, dass zwischen dem Förderelement 18 der Fördereinrichtung 16 einerseits und dem Band 130.1 ein Spalt und/oder eine Höhendifferenz besteht, beispielsweise weil das Band 130.1 etwas höher als das Förderelement 18 angeordnet ist, würde eine Wurst 1 oder mehrere Würste 3, die im Bereich des Spaltes aufgestaut werden, ausgerichtet und gegebenenfalls gruppiert werden. Insgesamt ist so eine weitere Ausrichtvorrichtung 122.2 mit Anschlageinrichtung 122.2 gebildet, die auch als Bremseinrichtung oder Stoppeinrichtung bezeichnet werden könnte, weil sie die Würste 1 bremst. Alternativ könnte das Endlos-Band 130.1 auch mit einer abweichenden Geschwindigkeit gefahren werden.

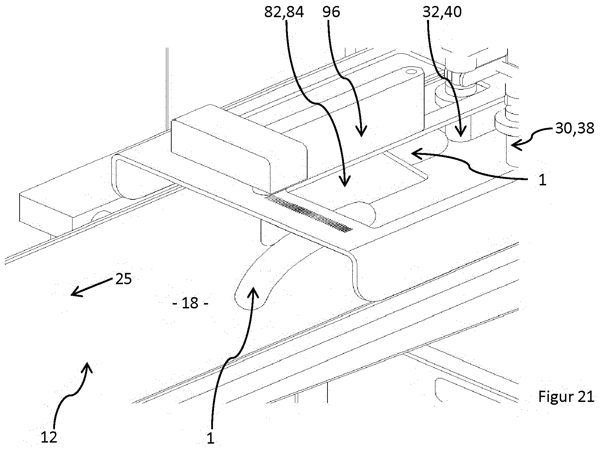

Figuren 20 und 21 veranschaulichen in vergrößerter Darstellung Details der Ausrichtvorrichtung 12 gemäß Figuren 5 bis 7.

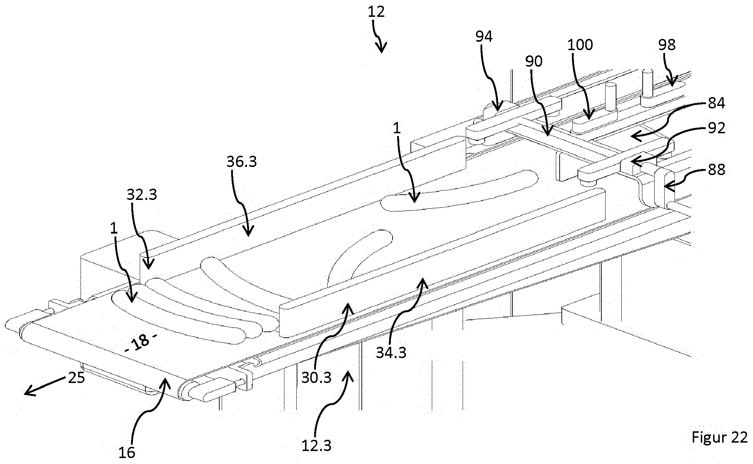

Figur 22 zeigt - rechts - eine Ausrichtvorrichtung 12 wie anhand der Figuren 5 bis 7 im Detail beschrieben zusammen mit einer nachgeordneten weiteren Ausrichtvorrichtung 12.3, die zwei Ausrichteinrichtungen 30.3, 32.3 mit jeweils einer länglichen, starren Führung 34.3, 36.3 aufweist, wobei die Führungen 34.3, 36.3 so beabstandet sind, dass der Abstand etwas größer ist oder annähernd gleich wie die Länge einer Wurst 1. Im Übrigen wird vollumfänglich auf die obigen Beschreibungen Bezug genommen.

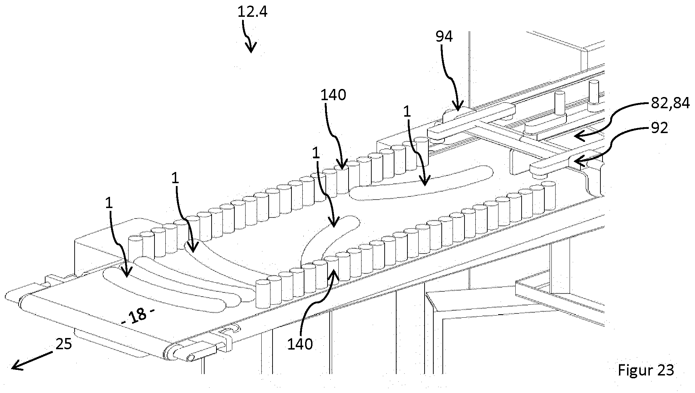

Das des Weiteren in Figur 23 gezeigte alternative Ausführungsbeispiel ähnelt dem zuvor anhand der Figur 22 beschriebenen und unterscheidet sich im wesentlichen dadurch, dass eine alternative Ausführungsform einer Ausrichtvorrichtung 12.4 gezeigt ist, die statt Führungen 30, 32 der jeweiligen Ausrichteinrichtung in Form von Schienen eine Vielzahl von Rollen 140 aufweist, welche im Wesentlichen in einer Reihe angeordnet sind, die sich in Förderrichtung erstreckt. Alle oder nur einige der Rollen können motorisch angetrieben sein mit Hilfe eines oder mehrerer Motoren und ggf. unter Zwischenschaltung eines Getriebes. Der Abstand der beiden Reihen aus Rollen 140 ist so gewählt, dass er im Wesentlichen einer Länge einer Wurst entspricht oder geringfügig größer ist. So werden die Würste 1, die auf dem Förderelement 18 liegend in Förderrichtung 25 bewegt werden, mit Hilfe der die Führungen 34, 36 bildenden Rollen 140 ausgerichtet, sodass sie etwa quer zur Förderrichtung 25 liegend auf dem Band 18 angeordnet sind, nach dem Durchlaufen der Führungen 34, 36. Alternativ wäre es auch möglich, den Abstand der durch mehrere Rollen 140 gebildeten Führungen 30,32 der jeweiligen Ausrichteinrichtung so zu wählen, das er im wesentlichen dem Kaliber der Wurst 1 entspricht

**Bezugszeichenliste**

| | | | |
|---|---|---|---|
| | | 62 | Verstelleinrichtungen |
| | | 64 | Handkurbel |
| 1,3 | Wurst | 66 | Schraubspindel |
| 2 | System | 68, 70 | Block |
| 4 | Füllmaschine | 72, 74 | Lagerblock |
| 6 | Fülltrichter | 78, 80 | Gehäuse |
| 8 | Abdreheinrichtung | 82 | Trenneinrichtung |
| 10 | Trenneinrichtung | 84 | Trennelement |
| 12 | Vorrichtung | 86 | Verstelleinrichtung |
| 12.1, 12.2, 12.3, 12.4 14 | Verpackungsmaschine | 88 | Handkurbel |
| | | 90 | Schraubspindel (?) |
| 16 | Fördereinrichtung | 92, 94 | Lagerböcke |
| 18 | Förderelement | 96 | Halteglied |
| 20 | Rollen | 98, 100 | Handkurbel |
| 22 | Gestell | 102 | Frontfläche |
| 25 | Förderrichtung | 104 | Einrichtung |
| 30, 32 | Ausrichteinrichtungen | 106 | Düse |
| 31, 33 | Schiene | 108 | Öffnungen |
| 34, 36 | Führung | 110 | Haltevorrichtung |
| 35 | Zuführbereich | 112, 114 | Führungselement |
| 37 | angeordnete Führung | 120, 120.1, 120.2, 120.3 | Vorrichtung |
| 38, 40 | erstreckendes Band | 122 | Anschlageinrichtung |
| 41, 43 | starre Schiene | 124 | Anschlag |
| 42, | 44Umlenkrollen | 126 | Rolle |
| 43,45 | Spannrollen | 127 | Drehachse |
| 49 | Ausrichtbereich | 128 | Vorsprüngen |
| 50, 52 | Halteelement | 130 | Endlos-Band |
| 54, 56 | Schlitze | 132 | Vorsprünge |
| 58, 60 | Fixierschrauben | 140 | Rollen(bahn) |

## Patentansprüche

1. Vorrichtung (12) zum Ausrichten von gekrümmten Würsten (1), aufweisend mindestens eine Fördereinrichtung (16) mit einem bewegbaren, umlaufenden Förderelement (18), auf welches einzelne gekrümmte Würste (1) auflegbar und in eine Förderrichtung (25) entlang einer Bewegungsbahn transportierbar sind,
wobei zwei quer zur Förderrichtung (25) voneinander beabstandete und oberhalb des bewegbaren Förderelementes (18) angeordnete Ausrichteinrichtungen (30, 32) mit jeweils mindestens einer Führung (34, 36) zum seitlichen Führen der Würste angeordnet sind und
wobei der Abstand der Führungen (34, 36) der Ausrichteinrichtung (30, 32) so eingestellt ist, dass die gekrümmte Wurst (1) durch die beabstandeten seitlichen Führungen (34, 36) elastisch verformt und dabei wenigstens etwas begradigt bzw. geradegebogen wird **dadurch gekennzeichnet dass** während des weiteren Transportes entlang der Bewegungsbahn das vordere Ende der Wurst (1) von den Führungen (34, 36) der beabstandeten Ausrichteinrichtung (30, 32) freikommt, während ein hinterer Abschnitt der Wurst noch zwischen den Führungen (34, 36) verbleibt, die Wurst (1) dann nach dem Freikommen aufgrund der Elastizität wenigstens teilweise wieder ihre zuvor stärker gekrümmte Form annimmt, und der vordere Abschnitt der Wurst (1) dabei in eine Richtung quer zur Förderrichtung (25) und damit wenigstens etwas quer zur Bewegungsbahn der Wurst (1) bewegt wird.

2. Vorrichtung nach Anspruch 1,
**dadurch gekennzeichnet, dass** jede Ausrichteinrichtungen (30, 32) jeweils eine längliche sich in Förderrichtung (25) erstreckende Führung (34, 36) für die Würste aufweist, wobei die Führungen (34, 36) sich in einem Abstand quer zur Förderrichtung einander gegenüberliegen.

3. Vorrichtung nach Anspruch 1,
**dadurch gekennzeichnet, dass** der Abstand der Führungen (34, 36) der zwei Ausrichteinrichtungen (30, 32) mittels einer Verstelleinrichtung (62) verstellbar ist.

4. Vorrichtung nach Anspruch 2 oder 3,
**dadurch gekennzeichnet, dass** die Länge der Führung (34, 36) und der Abstand der gegenüberliegenden Führungen (34, 36) zueinander variabel und an die Längen der Würste (1) anpassbar ist.

5. Vorrichtung nach einem der Ansprüche 2 bis 4,
**dadurch gekennzeichnet, dass** die Länge einer Führung (34, 36) in etwa der Länge einer Wurst (1) und der Abstand in etwa dem Kaliber einer Wurst (1) entspricht.

6. Vorrichtung nach einem der Ansprüche 2 bis 5,
**dadurch gekennzeichnet, dass** die Führung (34, 36) als im Wesentlichen starre Schiene (41, 43) oder als umlaufendes sich im Wesentlichen in Förderrichtung erstreckendes Band (38, 40) oder als Rollenbahn (140) ausgebildet ist.

7. Vorrichtung nach mindestens einem der vorstehenden Ansprüche,
**gekennzeichnet durch** eine bezogen auf die Förderrichtung (25) stromabwärts von den Ausrichteinrichtungen (30 32) angeordnete Trenneinrichtung (82) zum Trennen der zuvor ausgerichteten Würste (1), die ein oberhalb des Förderelementes (18) einer Fördereinrichtung (16) angeordnetes in die Bewegungsbahn ragendes Trennelement (84) aufweist.

8. Vorrichtung nach mindestens einem der vorstehenden Ansprüche,
**gekennzeichnet durch** eine Einrichtung (104) zum Aufbringen eines flüssigen Gleitmittels auf das Förderelement (18) und/oder die Würste (1), welche mindestens eine Abgabe-Düse (106) für flüssiges Gleitmittel auf das Förderelement (18) und/oder die Würste (1) sowie eine mit einer Pumpe verbindbare Zuführleitung zum Zuführen des Gleitmittels zu der Düse (106) aufweist.

9. Vorrichtung (120) nach mindestens einem der vorstehenden Ansprüche, aufweisend
**gekennzeichnet durch** eine benachbart zu dem bewegbaren Förderelement (18) angeordneten Anschlageinrichtung (122) mit einem Anschlag (124) zum temporären Stoppen einer oder mehrerer Würste (1) auf ihrer Bewegungsbahn, welcher in die Bewegungsbahn hinein bzw. aus der Bewegungsbahn der Würste (1) hinaus bewegbar ist, wobei der Anschlag (124) mit zwei gegenüberliegenden Führungen (34, 36), die die Wurst (1) quer zur Förderrichtung ausrichten, kooperiert.

10. Verfahren zum Ausrichten von gekrümmten Würsten (1), bei dem einzelne gekrümmten Würste (1) auf ein bewegbares, umlaufendes Förderelement (18) einer Fördereinrichtung (16) aufgebracht werden, die Würste (1) entlang einer Bewegungsbahn auf dem Förderelement (18) transportiert werden, die Würste (1) in eine Ausrichtvorrichtung (12, 12.1, 12.2, 120) zwischen zwei beabstandete Ausrichteinrichtungen (30, 32, 30.1, 32.1) mit jeweils einer Führung (34, 36) eingebracht werden, wobei der Abstand der Ausrichteinrichtungen (30, 32, 30.1, 32.) so gewählt ist, dass die gekrümmte Wurst (1) durch die beabstandeten seitlichen Führungen (34, 36) elastisch verformt und dabei wenigstens etwas begradigt bzw. geradegebogen wird,
**dadurch gekennzeichnet dass** während des weiteren Transportes entlang der Bewegungsbahn das vordere Ende der Wurst (1) von den Führungen (34, 36) der beabstandeten Ausrichtvorrichtung (30, 32, 30.1, 32.1) freikommt, während ein hinterer Abschnitt der Wurst (1) noch zwischen den Führungen (34, 36) verbleibt, die Wurst (1) dann nach dem Freikommen aufgrund der Elastizität wenigstens teilweise wieder ihre zuvor stärker gekrümmte Form annimmt, und der vordere Abschnitt der Wurst (1) dabei in eine Richtung quer zur Förderrichtung (16) und damit wenigstens etwas quer zur Bewegungsbahn der Wurst (1) bewegt wird.

11. Verfahren nach Anspruch 10,
**dadurch gekennzeichnet, dass** die Länge einer Führung (34, 36) in etwa der Länge einer Wurst (1) und der Abstand in etwa dem Kaliber einer Wurst (1) entspricht und eine Wurst (1) im Wesentlichen längs zwischen die Führungen (34, 36) transportiert und dort elastisch verformt wird.

12. Verfahren nach Anspruch 11,
**gekennzeichnet durch** das Zuführen der in Förderrichtung (25) ausgerichteten Würste (1) zu einer Trenneinrichtung (82) und somit Sortieren der Würste (1) in zwei Gruppen von Würsten (1) mit gleichmäßig ausgerichteten Krümmungen.

13. Verfahren nach einem der vorstehenden Ansprüche 10 bis 12, bei dem die Würste (1) einem Anschlag (124) zugeführt werden, an dem mindestens eine oder mehrere Würste (1) temporär auf ihrer Bewegungsbahn gestoppt werden, und anschließend eine oder mehrere Würste (1) gruppiert weitertransportiert und ggf. verpackt werden können.

14. Verfahren nach mindestens einem der vorstehenden Ansprüche 10 bis 13, bei dem die Würste (1) zunächst mittels einer Füllmaschine (4) in einen Darm eingefüllt, anschließend mit einer Abdreheinrichtung (8) abgedreht, anschließend mittels einer Trenneinrichtung (10) vereinzelt und anschließend einer Ausrichtvorrichtung (12) zugeführt werden, vorzugsweise einer Ausrichtvorrichtung (12) nach mindestens einem der vorstehenden Ansprüche.

## Claims

1. Apparatus (12) for orienting curved sausages (1), having at least one conveyor device (16) with a moveable circulating conveyor element (18) on which individual curved sausages (1) can be placed and transported in a conveyor direction (25) along a path of movement,
wherein there are arranged two orientation devices (30, 32) which are spaced from each other transversely relative to the conveyor direction (25) and disposed above the moveable conveyor element (18) and having at least one respective guide (34, 36) for laterally guiding sausages, and
wherein the spacing of the guides (34, 36) of the orientation device (30, 32) is so set that the curved sausage (1) is elastically deformed by the spaced lateral guides (34, 36) and in that case at least approximately straightened or bent straight,
**characterized in that**,
during further transport along the path of movement the front end of the sausage (1) comes free from the guides (34, 36) of the spaced orientation device (30, 32) while a rear portion of the sausage still remains between the guides (34, 36), the sausage (1) then after coming free by virtue of the elasticity at least partially again assumes its previously more greatly curved shape and **in that** case the front portion of the sausage (1) is moved in a direction transversely relative to the conveyor direction (25) and thus at least approximately transversely relative to the path of movement of the sausage (1).

2. Apparatus according to claim 1
**characterised in that** each orientation device (30, 32) respectively has an elongate guide (34, 36) extending in the conveyor direction (25) for the sausages, wherein the guides (34, 36) are disposed in mutually opposite spaced relationship transversely relative to the conveyor direction.

3. Apparatus according to claim 1
**characterised in that** the spacing of the guides (34, 36) of the two orientation devices (30, 32) is adjustable by means of an adjusting device.

4. Apparatus according to claim 2 or claim 3
**characterised in that** the length of the guide (34, 36) and the spacing of the mutually opposite guides (34, 36) is variable relative to each other and can be adapted to the lengths of the sausages (1).

5. Apparatus according to one of claims 2 to 4
**characterised in that** the length of a guide (34, 36) approximately corresponds to the length of a sausage (1) and the spacing approximately corresponds to the calibre of a sausage (1).

6. Apparatus according to one of claims 2 to 5
**characterised in that** the guide (34, 36) is in the form of a substantially rigid rail (41, 43) or in the form of a circulating belt (38, 40) extending substantially in the conveyor direction or in the form of a roller track (140).

7. Apparatus according to at least one of the preceding claims **characterised by** a separating device (82) arranged downstream of the orientation devices (30, 32) with respect to the conveyor direction (25) for separating the previously oriented sausages (1), having a separating element (84) arranged above the conveyor element (18) of a conveyor device (16) and projecting into the path of movement.

8. Apparatus according to at least one of the preceding claims **characterised by** a device (104) for applying a liquid lubricant to the conveyor element (18) and/or the sausages (1), having at least one discharge nozzle (106) for discharging liquid lubricant on to the conveyor element (18) and/or the sausages and a feed line connectable to a pump for feeding the lubricant to the nozzle (106).

9. Apparatus according to at least one of the preceding claims **characterised by** an abutment device (122) arranged adjacent to the moveable conveyor element (18) and having an abutment (124) for temporarily stopping one or more sausages (1) on their path of movement, which is moveable into and out of the path of movement of the sausages (1),
wherein the abutment (124) cooperates with two mutually opposite guides (34, 36) which orient the sausage (1) transversely relative to the conveyor direction.

10. A method of orienting curved sausages (1) in which individual curved sausages (1) are disposed on a moveable circulating conveyor element (18) of a conveyor device (16), the sausages (1) are transported along a path of movement on the conveyor element (18), the sausages (1) are introduced into an orientation apparatus (12, 12.1, 12.2, 120) between two spaced orientation devices (30, 32, 30.1, 32.1) with a respective guide (34, 36), wherein the spacing of the orientation devices (30, 32, 30.1, 32.1) is so selected that the curved sausage (1) is elastically deformed by the spaced lateral guides (34, 36) and in that case is at least approximately straightened or bent straight, during further transport along the path of movement the front end of the sausage (1) comes free from the guides (34, 36) of the spaced orientation devices (30, 32, 30.1, 32.1) while a rear portion of the sausage (1) still remains between the guides (34, 36), the sausage (1) then after coming free by virtue of the elasticity at least partially assumes again its previously more greatly curved shape, and in that case the front portion of the sausage (1) is moved in a direction transversely relative to the conveyor direction (16) and thus at least approximately transversely relative to the path of movement of the sausage (1).

11. A method according to claim 10
**characterised in that** the length of a guide (34, 36) approximately corresponds to the length of a sausage (1) and the spacing approximately corresponds to the calibre of a sausage (1) and a sausage (1) is transported substantially lengthwise between the guides (34, 36) and elastically deformed there.

12. A method according to claim 11
**characterised by** the feed of the sausages (1) oriented in the conveyor direction (25) to a separating device (82) and thus sorting of the sausages (1) in two groups of sausages (1) with uniformly oriented curvatures.

13. A method according to one of preceding claims 27 to 29 in which the sausages (1) are fed to an abutment (124) at which at least one or more sausages (1) are temporarily stopped on their path of movement and then one or more sausages (1) can be further transported and optionally packaged in grouped relationship.

14. A method according to at least one of preceding claims 10 to 13 in which the sausages (1) are firstly introduced into a casing by means of a filling machine (4), then twisted off with a twisting-off device (8), then individually separated by means of a separating device (10) and then fed to an orientation apparatus (12), preferably an orientation apparatus (12) according to at least one of the preceding claims.

## Revendications

1. Dispositif (12) d'alignement de saucisses (1) incurvées, présentant au moins un dispositif de transport (16) avec un élément de transport (18) périphérique mobile, sur lequel des saucisses (1) incurvées individuelles peuvent être posées et transportées dans une direction de transport (25) le long d'une trajectoire,
dans lequel deux dispositifs d'alignement (30, 32) espacés l'un de l'autre transversalement à la direction de transport (25) et disposés au-dessus de l'élément de transport (18) mobile sont disposés avec respectivement au moins un guidage (34, 36) pour le guidage latéral des saucisses et
dans lequel la distance des guidages (34, 36) du dispositif d'alignement (30, 32) est réglée de sorte que la saucisse (1) incurvée soit déformée élastiquement par les guidages (34, 36) latéraux espacés et ce faisant au moins à peu près rectifiée ou redressée, **caractérisé en ce que**
pendant la suite du transport le long de la trajectoire, l'extrémité avant de la saucisse (1) se dégage des guidages (34, 36) du dispositif d'alignement (30, 32) espacé, pendant qu'une section arrière de la saucisse reste encore entre les guidages (34, 36), la saucisse (1) adopte alors après le dégagement en raison de l'élasticité au moins en partie à nouveau sa forme plus incurvée auparavant, et la section avant de la saucisse (1) est déplacée ce faisant dans une direction transversale à la direction de transport (25) et ainsi au moins à peu près transversale à la trajectoire de la saucisse (1).

2. Dispositif selon la revendication 1,
**caractérisé en ce que** chaque dispositif d'alignement (30, 32) présente respectivement un guidage (34, 36) allongé s'étendant dans la direction de transport (25) pour les saucisses, dans lequel les guidages (34, 36) se font face à une distance transversale à la direction de transport.

3. Dispositif selon la revendication 1,
**caractérisé en ce que** la distance des guidages (34, 36) des deux dispositifs d'alignement (30, 32) est réglable au moyen d'un dispositif de réglage (62).

4. Dispositif selon la revendication 2 ou 3,
**caractérisé en ce que** la longueur du guidage (34, 36) et la distance des guidages (34, 36) opposés sont variables l'une par rapport à l'autre et adaptables aux longueurs des saucisses (1).

5. Dispositif selon l'une quelconque des revendications 2 à 4,
**caractérisé en ce que** la longueur d'un guidage (34, 36) correspond à peu près à la longueur d'une saucisse (1) et la distance, à peu près au calibre d'une saucisse (1).

6. Dispositif selon l'une quelconque des revendications 2 à 5,
**caractérisé en ce que** le guidage (34, 36) est réalisé en tant que rail (41, 43) sensiblement rigide ou en tant que bande (38, 40) périphérique s'étendant sensiblement dans la direction de transport ou en tant que train de rouleaux (140).

7. Dispositif selon au moins l'une quelconque des revendications précédentes,
**caractérisé par** un dispositif de séparation (82) disposé par rapport à la direction de transport (25) en aval des dispositifs d'alignement (30, 32) pour la séparation des saucisses (1) alignées auparavant, qui présente un élément de séparation (84) dépassant dans la trajectoire disposé au-dessus de l'élément de transport (18) d'un dispositif de transport (16).

8. Dispositif selon au moins l'une quelconque des revendications précédentes,
**caractérisé par** un dispositif (104) d'application d'un lubrifiant fluide sur l'élément de transport (18) et/ou les saucisses (1), lequel présente au moins une buse de distribution (106) pour lubrifiant fluide sur l'élément de transport (18) et/ou les saucisses (1) ainsi qu'une conduite de fourniture pouvant être reliée à une pompe pour la fourniture du lubrifiant à la buse (106).

9. Dispositif (120) selon au moins l'une quelconque des revendications précédentes, présentant
**caractérisé par** un dispositif de butée (122) disposé de manière adjacente à l'élément de transport (18) mobile avec une butée (124) pour l'arrêt temporaire d'une ou plusieurs saucisses (1) sur leur trajectoire, laquelle est mobile dans la trajectoire ou hors de la trajectoire des saucisses (1),
dans lequel la butée (124) coopère avec deux guidages (34, 36) opposés, qui alignent la saucisse (1) transversalement à la direction de transport.

10. Procédé d'alignement de saucisses (1) incurvées, dans lequel des saucisses (1) incurvées individuelles sont mises sur un élément de transport (18) périphérique mobile d'un dispositif de transport (16), les saucisses (1) sont transportées le long d'une trajectoire sur l'élément de transport (18), les saucisses (1) sont introduites dans un dispositif d'alignement (12, 12.1, 12.2, 120) entre deux dispositifs d'alignement (30, 32, 30.1, 32.1) espacés avec respectivement un guidage (34, 36), dans lequel la distance des dispositifs d'alignement (30, 32, 30.1, 32.) est sélectionnée de sorte que la saucisse (1) incurvée soit déformée élastiquement par les guidages (34, 36) latéraux espacés et ce faisant au moins à peu près rectifiée ou redressée,
**caractérisé en ce que**, pendant la suite du transport le long de la trajectoire, l'extrémité avant de la saucisse (1) se dégage des guidages (34, 36) du dispositif d'alignement (30, 32, 30.1, 32.1) espacé, pendant qu'une section arrière de la saucisse (1) reste encore entre les guidages (34, 36), la saucisse (1) adopte alors après le dégagement en raison de l'élasticité au moins en partie à nouveau sa forme plus incurvée auparavant, et la section avant de la saucisse (1) est déplacée ce faisant dans une direction transversale à la direction de transport (16) et ainsi au moins à peu près transversale à la trajectoire de la saucisse (1).

11. Procédé selon la revendication 10,
**caractérisé en ce que** la longueur d'un guidage (34, 36) correspond à peu près à la longueur d'une saucisse (1) et la distance, à peu près au calibre d'une saucisse (1) et une saucisse (1) est transportée sensiblement longitudinalement entre les guidages (34, 36) et y est déformée élastiquement.

12. Procédé selon la revendication 11,
**caractérisé par** la fourniture des saucisses (1) alignées dans la direction de transport (25) vers un dispositif de séparation (82) et ainsi le tri des saucisses (1) en deux groupes de saucisses (1) à courbures alignées uniformément.

13. Procédé selon l'une quelconque des revendications précédentes 10 à 12, dans lequel les saucisses (1) sont fournies à une butée (124), au niveau de laquelle une ou plusieurs saucisses (1) sont arrêtées temporairement sur leur trajectoire et ensuite une ou plusieurs saucisses (1) peuvent continuer d'être transportées groupées et le cas échéant emballées.

14. Procédé selon au moins l'une quelconque des revendications précédentes 10 à 13, dans lequel les saucisses (1) sont d'abord insérées dans un boyau au moyen d'une machine de remplissage (4), puis tournées avec un dispositif de tournage (8), puis individualisées au moyen d'un dispositif de séparation (10) et ensuite fournies à un dispositif d'alignement (12), de préférence à un dispositif d'alignement (12) selon au moins l'une quelconque des revendications précédentes.
